(19) Europäisches Patentamt
European Patent Office
Office européen des brevets

(11) EP 4 083 082 A1

(12) EUROPEAN PATENT APPLICATION
published in accordance with Art. 153(4) EPC

(43) Date of publication:
02.11.2022 Bulletin 2022/44

(21) Application number: 20906660.4

(22) Date of filing: 18.11.2020

(51) International Patent Classification (IPC):
*C08F 20/58* (2006.01) *C08G 81/02* (2006.01)
*H01M 4/02* (2006.01) *H01M 4/04* (2006.01)
*H01M 4/587* (2010.01) *H01M 4/62* (2006.01)
*H01G 11/38* (2013.01) *H01M 6/16* (2006.01)

(52) Cooperative Patent Classification (CPC):
**C08F 20/58; C08G 81/02; H01G 11/38; H01M 4/02; H01M 4/04; H01M 4/587; H01M 4/62; H01M 6/16;** Y02E 60/10; Y02P 70/50

(86) International application number:
PCT/JP2020/042882

(87) International publication number:
WO 2021/131409 (01.07.2021 Gazette 2021/26)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 27.12.2019 JP 2019239103

(71) Applicants:
- OSAKA UNIVERSITY
  Suita-shi
  Osaka 565-0871 (JP)
- Daikin Industries, Ltd.
  Osaka-shi, Osaka 530-8323 (JP)

(72) Inventors:
- TAKASHIMA, Yoshinori
  Suita-shi, Osaka 565-0871 (JP)
- HARADA, Akira
  Suita-shi, Osaka 565-0871 (JP)
- OSAKI, Motofumi
  Suita-shi, Osaka 565-0871 (JP)
- HATANAKA, Yuko
  Suita-shi, Osaka 565-0871 (JP)
- HIRAGA, Kentarou
  Osaka-shi, Osaka 530-8323 (JP)
- YAMAZAKI, Shigeaki
  Osaka-shi, Osaka 530-8323 (JP)
- NOMURA, Takashi
  Osaka-shi, Osaka 530-8323 (JP)
- SUGIYAMA, Akinari
  Osaka-shi, Osaka 530-8323 (JP)

(74) Representative: Hoffmann Eitle
Patent- und Rechtsanwälte PartmbB
Arabellastraße 30
81925 München (DE)

# (54) RESIN COMPOSITION, POLYMER, METHOD FOR PRODUCING POLYMER, BINDER FOR ELECTROCHEMICAL DEVICE, ELECTRODE MIX, ELECTRODE, ELECTROCHEMICAL DEVICE, AND SECONDARY BATTERY

(57) Provided is a polymer suitable for a binder for an electrochemical device, which has excellent battery performance such as capacity retention, IV resistance, and reduction of gas generation.

A resin composition comprising a first polymer having a host group in a side chain and a second polymer having a carboxyl group in a side chain.

EP 4 083 082 A1

## Description

### Technical Field

The present disclosure relates to a resin composition, a polymer, a method for producing a polymer, a binder for an electrochemical device, an electrode mixture, an electrode, an electrochemical device, and a secondary battery.

### Background Art

In recent years, an electronic device such as a cellphone, a mobile personal computer, or a digital camera has rapidly become widespread, and the demand for an electrochemical device such as a small secondary battery has increased rapidly. Further, these devices have had higher performance and have been given an unprecedented function, and because of this, there is an increasing need for an electrochemical device that can withstand use under harsh conditions for a longer period of time.
Examples of the secondary battery include a lead battery, a NiCd battery, a nickel hydrogen battery, and a lithium battery, and in particular, a lithium battery has a high density per unit volume and weight, and the output thereof can be increased, and thus the demand therefor has increased rapidly.
These secondary batteries usually include a positive electrode and a negative electrode that are composed of a positive electrode or negative electrode active material, a binder, and a current collector, and the positive electrode and the negative electrode are separated from each other by a separator so as not to cause an electrical short circuit. The positive electrode, the negative electrode, and the separator are porous and are present in the state of being impregnated with an electrolytic solution.
Patent Literature 1 discloses a binder for a lithium battery, made of polyacrylic acid crosslinked with a specific cross-linking agent, for a lithium battery using silicon as an active material.
Patent Literature 2 discloses a battery electrode having a current collector and a negative electrode active material layer containing a negative electrode active material formed on a surface of the current collector and polyacrylic acid as a binder.
Patent Literatures 3 to 6 disclose a polymer material having a host group and/or a guest group and having excellent elongation.

### Citation List

### Patent Literature

Patent Literature 1: International Publication No. 2014/065407
Patent Literature 2: Japanese Patent Laid-Open No. 2009-80971
Patent Literature 3: International Publication No. 2018/038186
Patent Literature 4: International Publication No. 2013/162019
Patent Literature 5: International Publication No. 2012/036069
Patent Literature 6: Japanese Patent Laid-Open No. 2018-174038

### Summary of Invention

### Technical Problem

The present disclosure provides a polymer capable of improving battery performance such as capacity retention, IV resistance, and reduction of gas generation when used as a binder for an electrochemical device.

### Solution to Problem

The present disclosure provides a resin composition comprising a first polymer having a host group in a side chain and a second polymer having a carboxyl group in a side chain.
The first polymer preferably has a guest group.
The first polymer preferably has a hydroxyl group.
The present disclosure also provides a polymer having a host group (A) and a carboxyl group (B),
wherein the polymer has a number-average molecular weight of 50,000 to 5,000,000.

The present disclosure also provides a polymer obtained by chemically reacting a first polymer having a host group in a side chain and a second polymer having a carboxyl group in a side chain.
The first polymer preferably has a hydroxyl group.
In the polymer, it is preferable that the chemical reaction is an ester group-forming reaction and the first polymer and the second polymer are crosslinked.
The host group is preferably cyclodextrin or a derivative thereof. The first polymer preferably has a guest group.
The guest group is preferably a hydrocarbon group.
The guest group preferably has 3 to 20 carbon atoms.
The guest group preferably has one or more fluorine groups.
The second polymer is preferably polyacrylic acid.
The present disclosure also provides a method for producing a polymer comprising performing an ester group-forming reaction with a first polymer having a host group in a side chain and a second polymer having a carboxyl group in a side chain.
The present disclosure also provides a binder for an electrochemical device, comprising the polymer according to any one of the above.
The present disclosure also provides an electrode mixture comprising the binder for an electrochemical device, an electrode active material, and a dispersion medium.
The present disclosure also provides an electrode comprising the above binder for an electrochemical device, an electrode active material, and a current collector.
The electrode may be a positive electrode.
The electrode may be a negative electrode.
The electrode active material preferably contains, in at least a part thereof, a carbonaceous material.
The electrode active material preferably contains, in at least a part thereof, a silicon-containing compound.
The present disclosure also provides an electrochemical device comprising any of the electrode according to any one of the above.
The present disclosure also provides a secondary battery comprising any of the electrode according to any one of the above.
The secondary battery may be a lithium ion battery.

Advantageous Effects of Invention

The polymer of the present disclosure can improve the capacity retention of a battery when used as a binder for an electrochemical device. Further, the internal resistance is small, the deterioration of the battery is small when the battery is used at a high temperature for a long time, and the battery can be used for a long period of time.

Description of Embodiments

Hereinafter, the present disclosure will be described in detail.
An electrochemical device converts electrical energy and chemical energy by exchanging an electron or an ion between electrodes, and generally includes a condenser, a capacitor, and a battery. An electron or a metal ion moves between the electrodes, and at this time, the metal ion is inserted into or removed from the active material contained in the electrodes. The insertion and removal of the metal ion causes a rapid volume change of the active material, and a defect such as a crack is likely to occur on the surface of a primary particle of the active material. Particularly in a high-capacity secondary battery, when a large amount of a metal ion moves in order to increase the output, the volume change becomes very large. Further, if the battery is discharged and charged for a long period of time, the active material becomes micronized, and a problem is that the life of the battery is finally shortened.
From these viewpoints, the development of a longlife electrochemical device has required the development of an active material and a binder that can suppress or follow the volume change due to discharge and charge.
The role of the conventional binder is to bind an active material and a current collector at an electrode to form a strong electrode plate and assist an inherent characteristic of the active material. The binder for an electrochemical device according to the present disclosure has the performance as the conventional binder and has unprecedented excellent elongation, and thereby can follow the volume change of the active material.
It is known that partially crosslinked polyacrylic acid, which is a polymer having a carboxyl group, is used as a binder for electrochemical devices. Since the carboxyl group of acrylic acid has high adhesion to the base material, suitable adhesion can be obtained.
On the other hand, various studies have been conducted on the polymers having a host group (A) in Patent Literatures 3 to 6. The polymer having a host group (A) has a structure in which the main chain of the resin penetrates through the host, and has high elongation and toughness based on the molecular structure. Further, when a polymer

having a guest group (D) in addition to the host group (A) is used, self-repairing performance based on host-guest action is obtained. If such self-repairing properties can be imparted to the binder, the battery performance can be improved more than before.

If a polymer having both of these performances can be obtained by combining the improvement of adhesion by the polymer having a carboxyl group and the self-repairing performance based the polymer having a host group (A), the polymer can be used as a binder having more excellent performance than ever before, and battery performance can be improved.

The present disclosure also provides a resin composition comprising a first polymer having a host group in a side chain and a second polymer having a carboxyl group in a side chain, or a polymer having a host group (A) and a carboxyl group (B). By using a polymer or resin composition having both of these functional groups, it is possible to provide a polymer having both of the functions of adhesion and self-repairing properties without causing the above-mentioned problems. Thus, a binder having excellent performance can be obtained. A battery using this can have a long lifespan. Further, even when a silicon-based negative electrode active material, which is likely to cause the above-mentioned problems, is used, the negative electrode active material may have good binder characteristics, and thus the lifespan of the battery may be increased. Further, it has excellent performance in that the internal resistance of the battery can be reduced.

The binder according to the present disclosure is preferably a polymer obtained by chemically reacting a resin composition comprising a first polymer having a host group in a side chain and a second polymer having a carboxyl group in a side chain, or a polymer having a host group (A) and a carboxyl group (B). In this case, it is more preferable to use a polymer having a hydroxyl group as the first polymer, and it is more preferable that the chemical reaction is an ester group-forming reaction. This point will be described later.

The number-average molecular weight of the polymer is within the range of 50,000 to 5,000,000, and thus it is possible to obtain good performance in performance such as adhesion and swelling resistance, thereby improving battery performance.

In the present disclosure, the number-average molecular weight is measured by GPC using dimethyl sulfoxide as an eluent and polyethylene glycol (CALIBRATION KIT, manufactured by SCIENTIFIC POLYMER PRODUCTS) as a standard substance. For the column, TSKgel Super AWM-H manufactured by Tosoh can be used.

The polymer of the present disclosure may further have a guest group (D) in the polymer. The polymer having the guest group (D) may generate self-repairing action by host-guest interaction, thereby contributing to improvement of battery performance.

Even when the polymer does not have the guest group (D), the self-repairing action can be obtained. That is, when the polymer having the guest group (D) is produced, the main chain of the polymer penetrates through at least a part of the host group (A). The polymer in which such a site is present shows a self-repairing action, and the effect of the present disclosure can be obtained even when the above-mentioned guest group (D) is not present.

In the following description, first, the host group (A) and the guest group (D) will be described in detail, then the monomers having the functional groups (A) to (D) will be described in detail, and then the polymer of the present disclosure will be described in detail.

(Host group (A))

Examples of the molecule for forming the host group include at least one selected from the group consisting of α-cyclodextrin, β-cyclodextrin, γ-cyclodextrin, calix[6]arenesulfonic acid, calix[8]arenesulfonic acid, 12-crown-4, 18-crown-6, [6]paracyclophane, [2,2]paracyclophane, cucurbit[6]uril, and cucurbit[8]uril. These host groups (A) may have a substituent. That is, the host group (A) may be a derivative of the host group (A).

The host group (A) is preferably a cyclodextrin or a derivative thereof (the term cyclodextrin as used herein also includes a compound chemically derived from a cyclodextrin). In this case, the host-guest interaction between the host group of the host polymer and the guest group of the guest polymer is likely to occur, and as a result, the polymer material has an improved mechanical property, and in particular, has excellent breaking strain and excellent elongation percentage and flexibility. In addition, the transparency of the polymer material becomes higher.

The host group (A) may be, for example, present in the polymer as a constituent unit represented by the general formula (1a) described later.

[Formula 1]

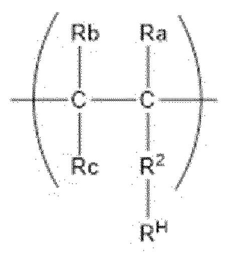

(1a)

wherein Ra represents a hydrogen atom, a methyl group, or a fluorine group; Rb represents a hydrogen atom or a fluorine group; Rc represents a hydrogen atom or a fluorine group; $R^2$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, an aldehyde group, and a carboxy group, or $-C(O)NH-(cH_2)_n-O-C(O)-$ (n is 2 to 8); and $R^H$ represents the host group.

In the formula (1a), when $R^2$ is a divalent group formed by removing one hydrogen atom from an alkoxy group, an example of the alkoxy group is an alkoxy group having 1 to 10 carbon atoms, specific examples thereof include a methoxy group, an ethoxy group, a propoxy group, an isopropoxy group, a butoxy group, an isobutoxy group, a sec-butoxy group, a pentyloxy group, and a hexyloxy group; and these can be linear or branched.

In the formula (1a), when $R^2$ is a divalent group formed by removing one hydrogen atom from a thioalkoxy group, an example of the thioalkoxy group is a thioalkoxy group having 1 to 10 carbon atoms, and specific examples thereof include a methylthio group, an ethylthio group, a propylthio group, an isopropylthio group, a butylthio group, an isobutylthio group, a sec-butylthio group, a pentylthio group, and a hexylthio group; and these can be linear or branched.

In the formula (1a), when $R^2$ is a divalent group formed by removing one hydrogen atom from an alkyl group, an example of the alkyl group is an alkyl group having 1 to 30 carbon atoms, and specific examples thereof include a methyl group, an ethyl group, propyl group, an isopropyl group, a butyl group, an isobutyl group, a sec-butyl group, a tert-butyl group, a pentyl group, an isopentyl group, a neopentyl group, and a hexyl group; and these can be linear or branched.

In the formula (1a), when $R^2$ is a divalent group formed by removing one hydrogen atom from an amino group optionally having one or more substituents, the nitrogen atom of the amino group can be bonded to a carbon atom in the main chain (C-C bond).

In the formula (1a), when $R^2$ is a divalent group formed by removing one hydrogen atom from an amide group optionally having one or more substituents, the carbon atom of the amide group can be bonded to a carbon atom in the main chain (C-C bond).

In the formula (1a), when $R^2$ is a divalent group formed by removing one hydrogen atom from an aldehyde group, the carbon atom of the aldehyde group can be bonded to a carbon atom in the main chain (C-C bond).

In the formula (1a), when $R^2$ is a divalent group formed by removing one hydrogen atom from a carboxy group, the carbon atom of the carboxy group can be bonded to a carbon atom in the main chain (C-C bond).

In the formula (1a), examples of $R^H$ include the host groups described above.

In formula (1a), $R^2$ is preferably a divalent group formed by removing one hydrogen atom from a monovalent group selected from the group consisting of an amide group and a carboxy group. That is, the constituent unit represented by the formula (1a) preferably has at least either one of a structure having an amide group in which a hydrogen atom is replaced with $R^H$ in a side chain and a structure having a carboxy group in which a hydrogen atom is replaced with $R^H$ in a side chain.

The constituent unit may have no fluorine group, and when the constituent unit has a fluorine group, the number of fluorine atoms is preferably 10 or less.

(Guest group (D))

The guest group is not limited, and examples thereof include a hydrocarbon group and an aromatic aryl group.

The hydrocarbon group is not limited, and examples thereof include an alkyl group, an alkenyl group, and an alkynyl group.

Examples of the alkyl group include a linear, branched, cyclic, or cage alkyl group having 1 to 20 carbon atoms

such as methyl, ethyl, propyl, isopropyl, butyl, isobutyl, sec-butyl, tert-butyl, pentyl, isopentyl, neopentyl, hexyl, heptyl, octyl, undecyl, dodecyl, tetradecyl, pentadecyl, hexadecyl, heptadecyl, octadecyl, cyclohexyl, and adamantyl.

Examples of the alkenyl group include a linear or branched alkenyl group having 2 to 20 carbon atoms, such as vinyl, 1-propen-1-yl, 2-propen-1-yl, isopropenyl, 2-buten-1-yl, 4-penten-1-yl, and 5-hexen-1-yl.

Examples of the alkynyl group include a linear or branched alkynyl group having 2 to 20 carbon atoms, such as ethynyl, 1-propyn-1-yl, 2-propyn-1-yl, 4-pentyn-1-yl, and 5-hexyn-1-yl.

The guest group may be linear, branched, cyclic or caged. The number of carbon atoms of the guest group is preferably 40 or less, and particularly preferably 3 to 20, from the viewpoint of being able to form a strong host-guest interaction. Among such groups, if the guest group is an adamantyl group or the like, such a group is preferable because it can form a strong host-guest interaction with β-cyclodextrin described later.

The guest group may have one or more fluorine groups.

When the guest group has a fluorine group, specific examples of the guest group include a hydrocarbon group having one or more fluorine groups (preferably a perfluorohydrocarbon group), a fluorine(poly)ether group, a perfluoro (poly) ether group, $-O-(CH_2CH_2-O)n-Rf$ (wherein Rf is a hydrocarbon group having one or more fluorine groups, and n is, for example, 1 to 20), and $-(CF_2)n-CN$ (wherein n is, for example, 1 to 20).

The number of carbon atoms of the hydrocarbon group having one or more fluorine groups is not limited, but is preferably 40 or less, and more preferably 1 to 20. In this case, since the guest group facilitates the host-guest interaction with the host group, the polymer material of the present embodiment has excellent breaking strain. The number of carbon atoms is more preferably 3 to 20, and particularly preferably 3 to 10.

When the guest group is a hydrocarbon group having one or more fluorine groups, the group can be linear or branched, and from the viewpoint that host-guest interaction is more likely to occur, the group is preferably linear. For example, examples of such a preferable guest group include a linear alkyl group having one or more fluorine groups.

When the guest group is a fluoro(poly)ether group, the number of carbon atoms thereof can be, for example, 3 to 40. Further, the number of oxygen atoms can be, for example, 13 to 30. In this case, the guest group facilitates the host-guest interaction with the host group, and thus the polymer material is likely to have excellent breaking strain. Specific examples of the fluoro(poly)ether group and the perfluoro(poly)ether group include a structure having $-(CF_2CF_2CF_2-O)_n-$ or $-(CF_2CF_2-O)_n(CF_2-O)_m-$ (for example, n and m is each 1 to 20) as a repeating structure thereof and having $-CF_2CF_3$ or $-CF_3$ as a terminal thereof.

When the guest group is a fluoro(poly)ether group, the group may be linear or branched, and from the viewpoint that host-guest interaction is more likely to occur, the group is preferably linear.

When the guest group is $-(CF_2)_n-CN$, n is, for example, 1 to 20.

The structure having the guest group is not limited, and can be, for example, a structure represented by the following general formula (2a):

[Formula 2]

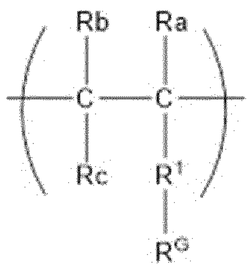

(2a)

wherein Ra represents a hydrogen atom, a methyl group or a fluorine group;

Rb represents a hydrogen atom or a fluorine group;

Rc represents a hydrogen atom or a fluorine group;

$R^1$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one or more substituents, an amide group optionally having one or more substituents, a phenyl group optionally having one or more substituents, an aldehyde group, and a carboxy group, and/or $-O-(CH_2-CH_2-O)n-$ (n is 1 to 20); and

$R^G$ represents a guest group.

The constituent unit having a guest group may be represented by, instead of or in combination with the structural unit represented by the general formula (2a), the following general formula (2'a):

[Formula 3]

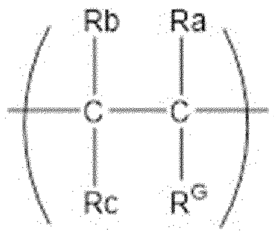

(2'a)

wherein
Ra, Rb, Rc, and $R^G$ are as defined in the formula (2a) .

(Polymer)

Examples of the polymer according to the present disclosure include a (meta)acrylic resin (acrylic polymer), a polyester-based resin, alkyd resin, polystyrene resin, melamine-formaldehyde resin, a polyisocyanate-based resin, a polyurethane-based resin, an epoxy-based resin, a vinyl chloride-based resin (for example, vinyl chloride-vinyl acetate copolymer), ketone resin, a polyamide-based resin, a polycarbonate-based resin, a polyacetal-based resin, petroleum resin, polyethylene, polypropylene, and an olefin-based resin obtained by polymerizing a chlorinated product or the like of such a polyolefin; an inorganic resin such as silica gel or silicic acid, or an elastomer (rubber) having the basic skeleton of such a resin.

Hereinafter, in the case of a polymer obtained by cleavage of an unsaturated bond, each of the constituent units (A) to (D) will be described in detail.

(Monomer having host group (A))

The structure represented by the above (1a) is a structure formed by polymerizing a monomer represented by the following general formula (1b):

[Formula 4]

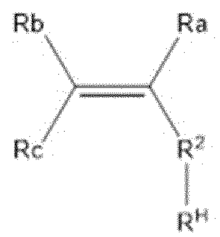

(1b)

wherein Ra, Rb, Rc, $R^2$, and $R^H$ are as defined for Ra, Rb, Rc, $R^2$, and $R^H$ in the formula (1a).

The monomer having the host group (A) may be a host group-containing polymerizable monomer represented by the general formulas (h1) to (h3):

[Formula 5]

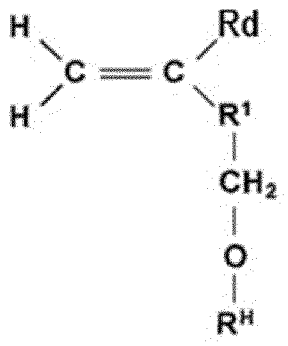

(h1)

wherein Rd represents a hydrogen atom or a methyl group; $R^H$ represents the host group; and $R^1$ represents a divalent group formed by removing one hydrogen atom from a monovalent group selected from the group consisting of a hydroxyl group, a thiol group, an alkoxy group optionally having one or more substituents, a thioalkoxy group optionally having one or more substituents, an alkyl group optionally having one or more substituents, an amino group optionally having one substituent, an amide group optionally having one substituent, an aldehyde group, and a carboxyl group.

[Formula 6]

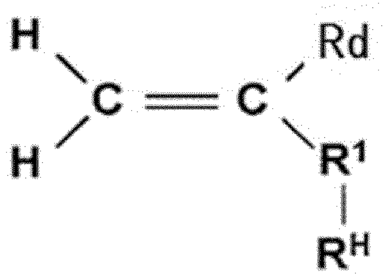

(h2)

[0065] wherein Rd, $R^H$, and $R^1$ are as defined for Rd, $R^H$, and $R^1$ in the formula (h1), respectively.

[Formula 7]

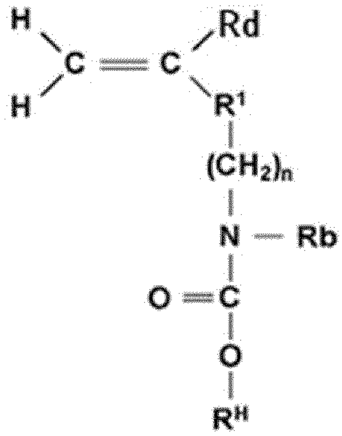

(h3)

wherein Rd, $R^H$, and $R^1$ are as defined for Rd, $R^H$, and $R^1$ in the formula (h1), respectively; n is an integer of 1 to 20, preferably 1 to 10, and more preferably 1 to 5; and Rb is hydrogen or an alkyl group having 1 to 20 carbon atoms (preferably an alkyl group having 1 to 10 carbon atoms, and more preferably an alkyl group having 1 to 6 carbon atoms).

The host group $R^H$ in the host group-containing polymerizable monomer represented by each of the formulas (h1) to (h3) is an example of the case of being a monovalent group obtained by removing one hydroxyl group from a cyclodextrin derivative.

In addition, the host group-containing polymerizable monomer can be one of the compounds represented by the formulas (h1) to (h3) alone, or can contain two or more thereof. In this case, Rd of the formulas (h1) to (h3) may be identical to or different from each other. Similarly, $R^H$ of the formulas (h1) to (h3) and $R^1$ of the formulas (h1) to (h3) may each be identical to or different from each other.

The substituents defined by the formulas (h1) to (h3) are not limited. Examples of the substituents include an alkyl group having 1 to 20 carbon atoms, an alkenyl group having 2 to 20 carbon atoms, an alkynyl group having 2 to 20 carbon atoms, a halogen atom, a carboxyl group, a carbonyl group, a sulfonyl group, a sulfone group, and a cyano group.

In the formulas (h1) to (h3), when $R^1$ is a divalent group formed by removing one hydrogen atom from an amino group optionally having one substituent, the nitrogen atom of the amino group can be bonded to a carbon atom of a C=C double bond.

In the formulas (h1) to (h3), when $R^1$ is a divalent group formed by removing one hydrogen atom from an amide group optionally having one substituent, the carbon atom of the amide group can be bonded to a carbon atom of a C=C double bond.

In the formulas (h1) to (h3), when $R^1$ is a divalent group formed by removing one hydrogen atom from an aldehyde group the carbon atom of the aldehyde group can be bonded to a carbon atom of a C=C double bond.

In the formulas (h1) to (h3), when $R^1$ is a divalent group formed by removing one hydrogen atom from a carboxyl group the carbon atom of the carboxyl group can be bonded to a carbon atom of a C=C double bond.

The host group-containing polymerizable monomers represented by (h1) to (h3) are each preferably a (meth)acrylic acid ester derivative (that is, $R^1$ is - COO-) and a (meth)acrylamide derivative (that is, $R^1$ is - CONH- or -CONR-). In this case, the polymerization reaction can easily proceed, and the toughness and strength of the polymer material obtained can also be higher. As used herein, the term (meth)acrylic refers to either acrylic or methacrylic.

R of the -CONR- is, for example, preferably an alkyl group having 1 to 20 carbon atoms, more preferably an alkyl group having 1 to 10 carbon atoms, and particularly preferably an alkyl group having 1 to 6 carbon atoms.

Specific examples of the host group-containing polymerizable monomer represented by the formula (h1) include the compounds of the following (h1-1) to (h1-6) derived from α-cyclodextrin, β-cyclodextrin, and γ-cyclodextrin (the figures are each a schematic diagram showing a cyclic shape, and all glucose units are α-1,4-glycosidically bound).

[Formula 8]

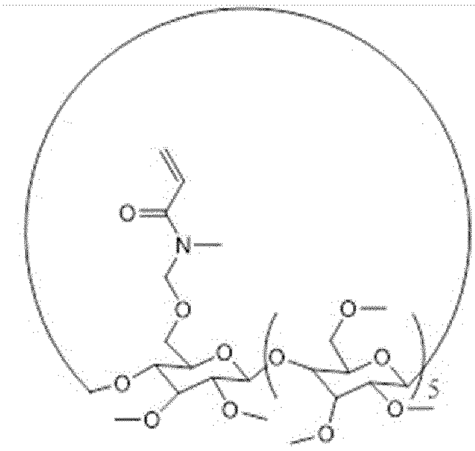

(h1-1)

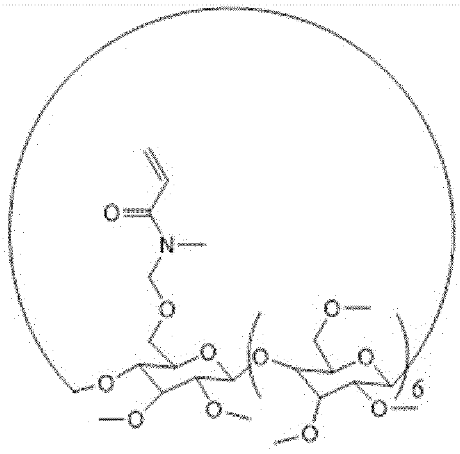

(h1-2)

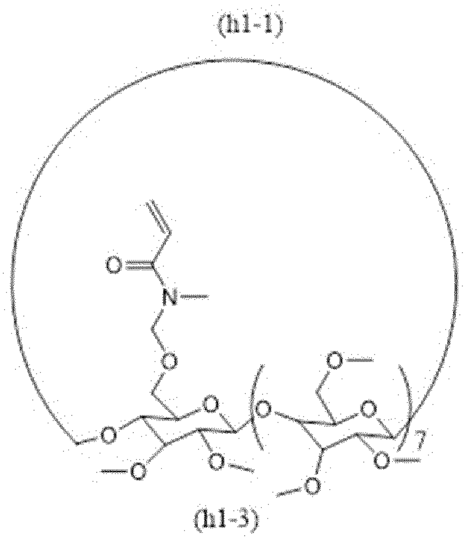

(h1-3)

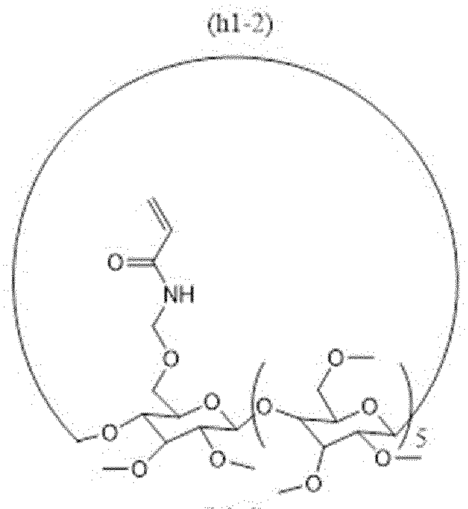

(h1-4)

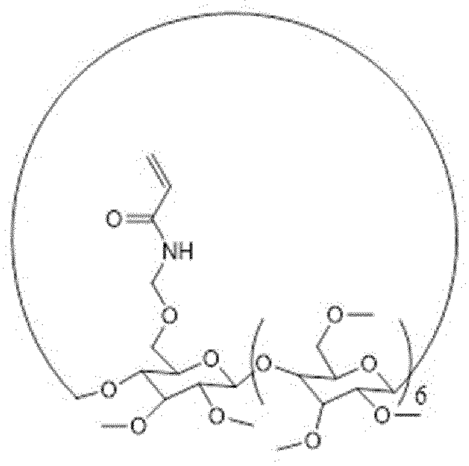

(h1-5)

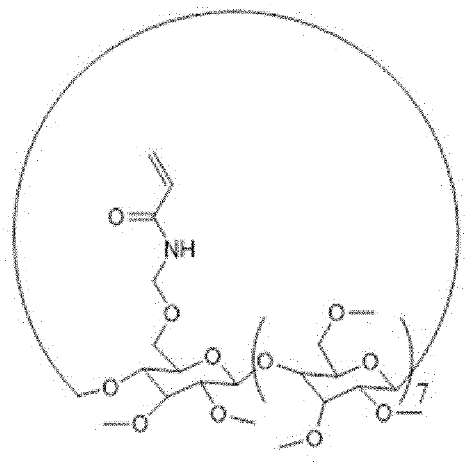

(h1-6)

The compounds represented by the formulas (h1-1), (h1-2), and (h1-3), wherein $R^1$ in the formula (h1) is -CONR- (R = a methyl group), have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with a methyl group. In the compounds represented by these (h1-1), (h1-2), and (h1-3), methyl replacement of the nitrogen atom of the amide site in each compound can be performed by the same reaction as methyl replacement of the hydrogen atoms of the hydroxyl groups in the cyclodextrin derivative described later. That is, there is the following advantage: the cyclodextrin site and the amide site can be methylated in a one-step reaction, and the compounds represented by the formulas (h1-1), (h1-2), and (h1-3)

can be easily obtained. The same also applies to formulas (h2-1), (h2-2), and (h2-3) described later.

The compounds represented by the formulas (h1-4), (h1-5), and (h1-6), wherein $R^1$ in the formula (h1) is -CONH-, have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with a methyl group.

Further, specific examples of the host group-containing polymerizable monomer represented by the formula (h1) include the compounds of the following (h1-7) to (h1-9) derived from α-cyclodextrin, β-cyclodextrin, and γ-cyclodextrin (the figures are each a schematic diagram showing a cyclic shape, and all glucose units are α-1,4-glycosidically bound).

[Formula 9]

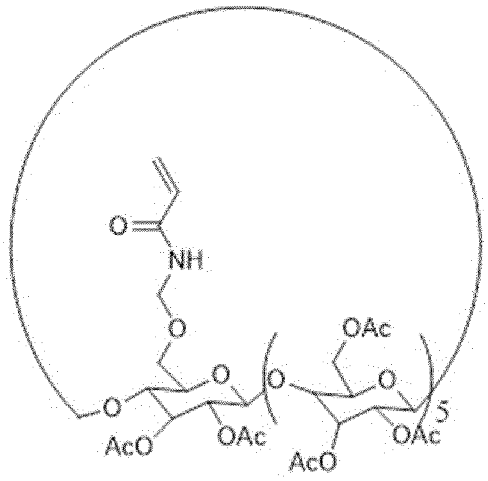

(h1-7)

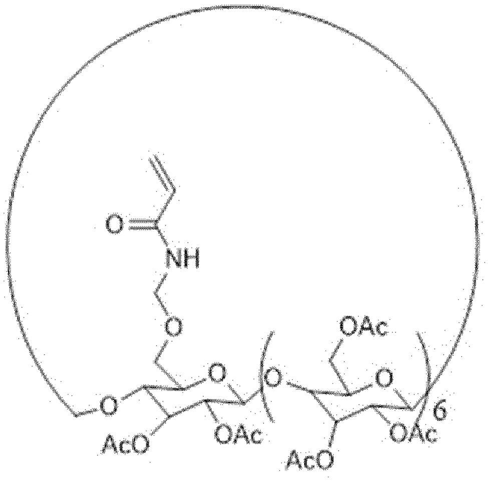

(h1-8)

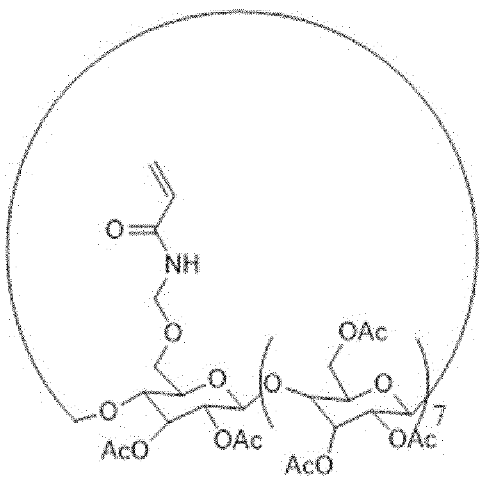

(h1-9)

The compounds represented by the formulas (h1-7), (h1-8), and (h1-9), wherein $R^1$ in the formula (h1) is -CONH-, have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with an acetyl group (indicated as "Ac" in each formula).

Further, specific examples of the host group-containing polymerizable monomer represented by the formula (h1) include the compound of the following formula (h1-10) derived from α-cyclodextrin, β-cyclodextrin, and γ-cyclodextrin (the figure is a schematic diagram showing a cyclic shape, and all glucose units are α-1,4-glycosidically bound).

[Formula 10]

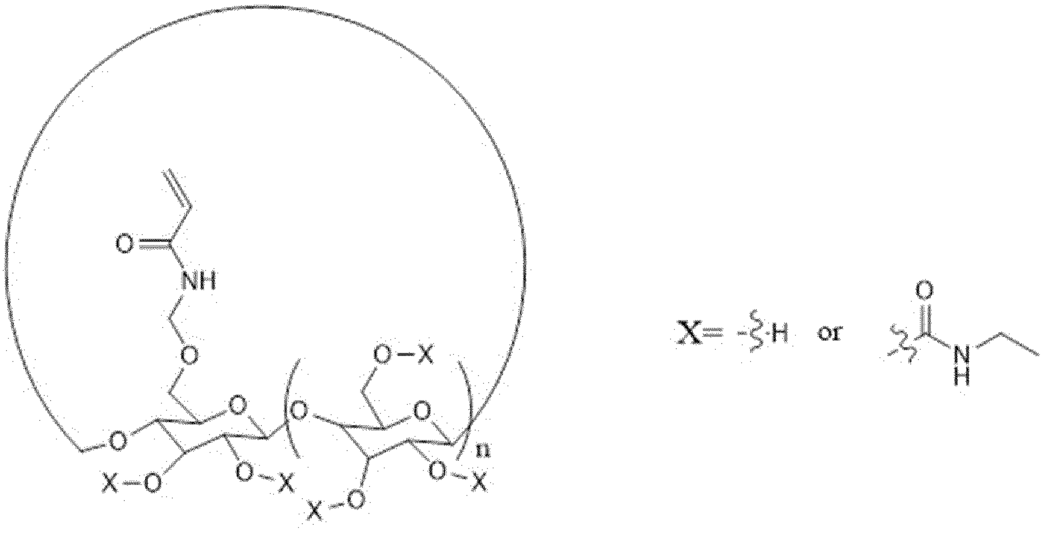

(h1-10)

wherein at least one X is a hydrogen atom, and at least one X is $-CONHC_2H_5$ (ethylcarbamate group); and n is 5, 6, or 7.

The compound represented by the formula (h1-10), wherein $R^1$ in the formula (h1) is -CONH-, has a host group obtained by removing one hydroxyl group from the cyclodextrin derivative. In addition, the hydrogen atoms of a number N-1 of hydroxyl groups in the cyclodextrin derivative are replaced with the X.

Specific examples of the host group-containing polymerizable monomer represented by the formula (h2) include the compounds of the following (h2-1) to (h2-9) derived from α-cyclodextrin, β-cyclodextrin, and γ-cyclodextrin (the figures are each a schematic diagram showing a cyclic shape, and all glucose units are α-1,4-glycosidically bound).

[Formula 11]

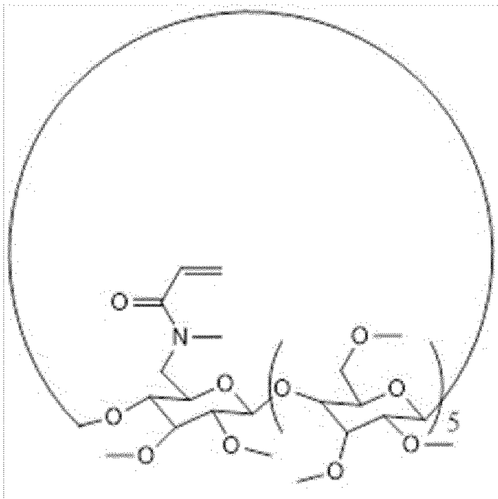

(h2-1)

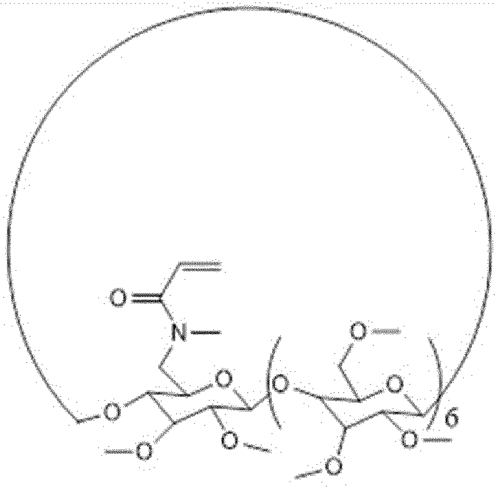

(h2-2)

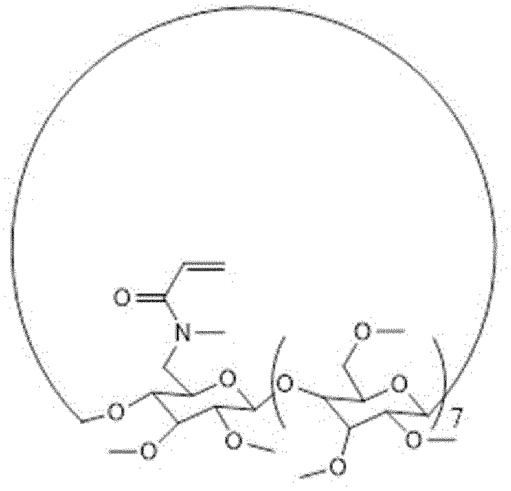

(h2-3)

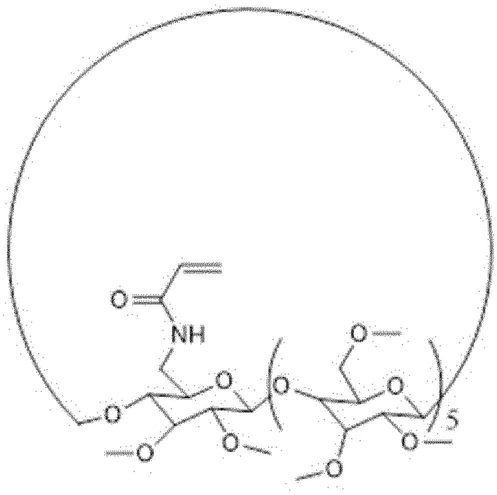

(h2-4)

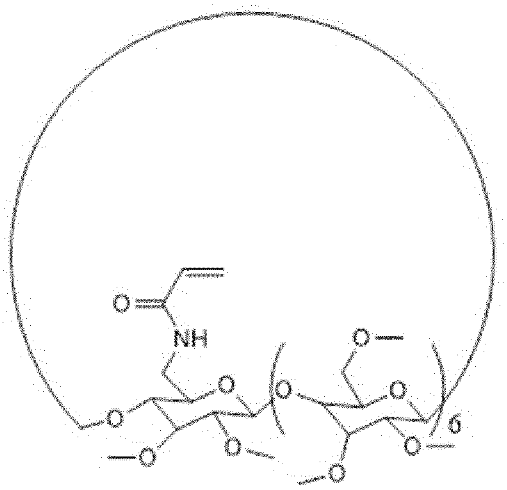

(h2-5)

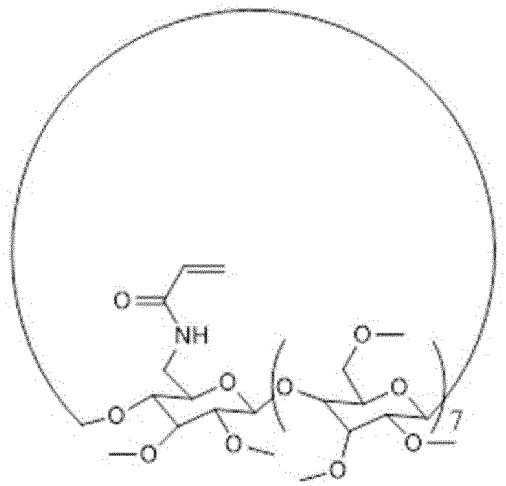

(h2-6)

[Formula 12]

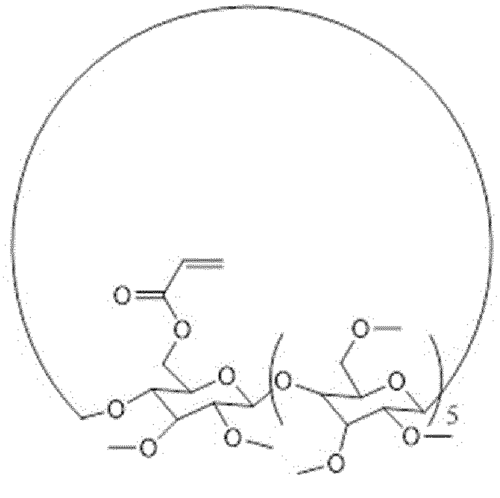

(h2-7)

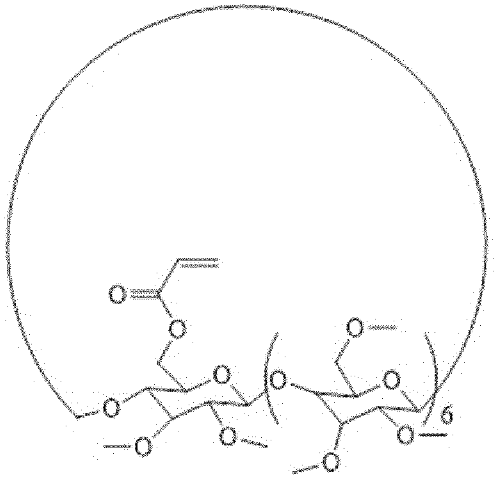

(h2-8)

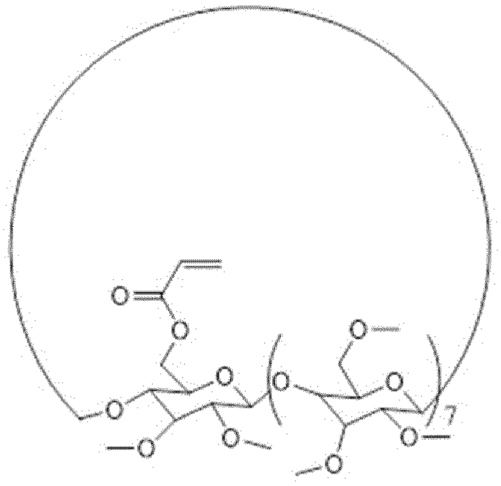

(h2-9)

The compounds represented by the formulas (h2-1), (h2-2), and (h2-3), wherein $R^1$ in the formula (h2) is -CONR- (R = a methyl group), have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with a methyl group.

The compounds represented by the formulas (h2-4), (h2-5), and (h2-6), wherein $R^1$ in the formula (h2) is -CONH-, have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with a methyl group.

The compounds represented by the formulas (h2-7), (h2-8), and (h2-9), wherein $R^1$ in the formula (h2) is -COO-, have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with a methyl group.

Specific examples of the host group-containing polymerizable monomer represented by the formula (h3) include the compounds of the following (h3-1) to (h3-3) derived from α-cyclodextrin, β-cyclodextrin, and γ-cyclodextrin (the figures are each a schematic diagram showing a cyclic shape, and all glucose units are α-1,4-glycosidically bound).

[Formula 13]

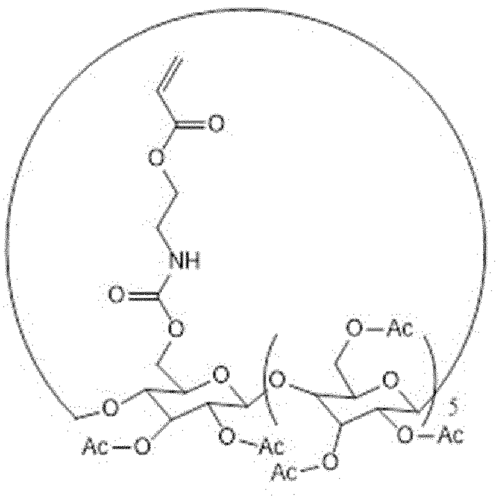

(h3-1)

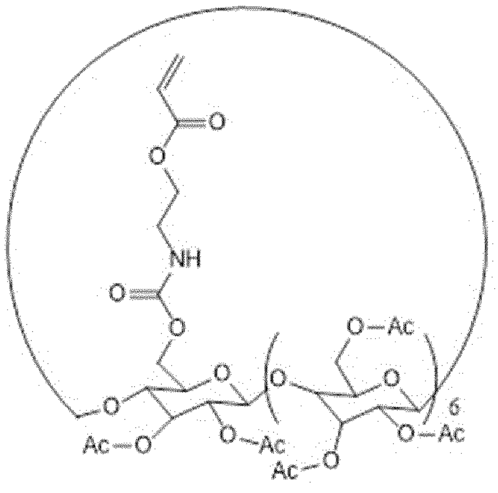

(h3-2)

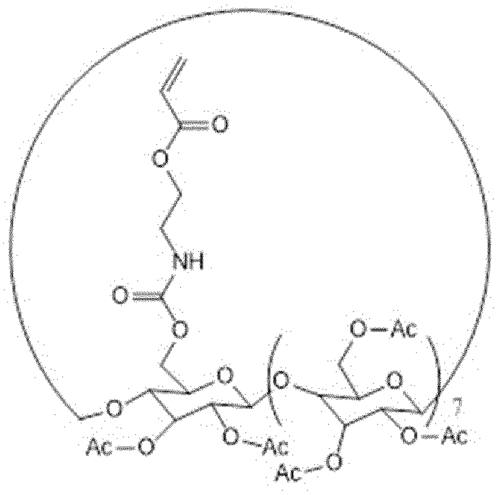

(h3-3)

The compounds represented by the formulas (h3-1), (h3-2), and (h3-3), wherein $R^1$ in the formula (h3) is -COO-, n = 2, and Rb is a hydrogen atom, have a host group obtained by removing one hydroxyl group from a α-cyclodextrin derivative, a β-cyclodextrin derivative, and a γ-cyclodextrin derivative, respectively. In addition, in each case, the hydrogen atoms of a number N-1 of hydroxyl groups in the cyclodextrin derivative are replaced with an acetyl group (Ac). In the formulas (h3-1), (h3-2), and (h3-3), the hydrogen atom at the position of Rb may be replaced with a methyl group.

The host group-containing polymerizable monomers represented by the above (h1-1) to (h1-9), (h2-1) to (h2-9), and (h3-1) to (h3-3) is each an acrylic type, and the effects of the present disclosure are not inhibited even if the structure is such that the hydrogen at the meta position is replaced with a methyl group, that is, a methacrylic type.

In the present disclosure, the proportion of the host group is preferably in the range of 0.01 as the lower limit to 0.4 as the upper limit (weight ratio) relative to the total solid content of the polymer. The lower limit is more preferably 0.1, and the upper limit is more preferably 0.25. If the proportion of the host group is less than the lower limit, a sufficient effect may not be obtained. If the proportion of the host group exceeds the upper limit, the elongation of the polymer may be reduced.

The type of the derivative of a cyclodextrin is not limited, and for example, a cyclodextrin derivative produced by a known method can be applied as the host group (A).

In addition, when the guest group is an alkyl group, the host group (A) is preferably α- or β-cyclodextrin and a

derivative thereof, and when the guest group is particularly a fluoroalkyl group, the host group (A) is preferably γ-cyclodextrin and a derivative thereof. In this case, the host-guest interaction with the guest group is particularly likely to occur, and the polymer material is excellent in breaking strain and excellent in elongation percentage and flexibility.

The host group may be a group in which a methylene group ($-CH_2-$) is bonded to an oxygen atom derived from a hydroxyl group of a cyclodextrin or a derivative thereof. In this case, the methylene group may be bonded to the main chain or side chain of any of the polymers constituting the copolymer or the resin composition. The methylene group ($-CH_2-$) plays the role as a so-called linker between cyclodextrin and any polymer which is a constituent of the copolymer or the resin composition. This facilitates host-guest interactions in the copolymer or resin composition of the present disclosure. This imparts flexibility to the polymer, and thus as a result, the polymer material has high breaking strain and excellent elongation percentage and flexibility, and the polymer material has excellent performance as a binder.

The methylene group can be bonded to a side chain of the copolymer or the first polymer. For example, when the copolymer or the first polymer has the constituent unit represented by the general formula (2a), the methylene group can be bonded to $R^2$ thereof. More specifically, when a side chain of the second polymer has an ester group, a methylene group can be bonded to the oxygen atom of the ester group, and when a side chain of the second polymer has an amide group, a methylene group can be bonded to the nitrogen atom of the amide group. In addition, the methylene group may be bonded to a C-C carbon atom of the main chain.

(Unsaturated monomer having carboxyl group (B))

The unsaturated monomer having a carboxyl group (B) is more preferably at least one kind selected from the group consisting of (meth)acrylic acid, crotonic acid, maleic acid, maleic anhydride, fumaric acid, itaconic acid, itaconic anhydride, citraconic acid, citraconic anhydride, mesaconic acid, and aconitic acid.

(Unsaturated monomer having hydroxyl group (C))

The unsaturated monomer having a hydroxyl group (C) is not limited, and any known unsaturated monomer can be used.

The hydroxyl group-containing monomer is preferably at least one selected from the group consisting of hydroxyalkyl vinyl ether, hydroxyalkyl allyl ether, hydroxycarboxylic acid vinyl ester, hydroxycarboxylic acid allyl ester and hydroxyalkyl (meth)acrylate, more preferably at least one selected from the group consisting of hydroxyalkyl vinyl ether, hydroxyalkyl (meth)acrylate and hydroxyalkyl allyl ether, and still more preferably hydroxyalkyl (meth)acrylate or hydroxyalkyl vinyl ether.

Examples of the hydroxyalkyl vinyl ether include 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether, 6-hydroxyhexyl vinyl ether, and 4-(hydroxymethyl)cyclohexylmethyl vinyl ether.

Examples of the hydroxyalkyl allyl ether include 2-hydroxyethyl allyl ether, 4-hydroxybutyl allyl ether, and glycerol monoallyl ether.

Examples of the hydroxycarboxylic acid vinyl ester include vinyl hydroxyacetate, vinyl hydroxypropanoate, vinyl hydroxybutanoate, vinyl hydroxyhexanoate, and vinyl 4-hydroxycyclohexylacetate.

Examples of the hydroxycarboxylic acid allyl ester include allyl hydroxyacetate, allyl hydroxypropanoate, allyl hydroxybutanoate, allyl hydroxyhexanoate, and allyl 4-hydroxycyclohexylacetate.

Examples of the hydroxyalkyl (meth)acrylate include 2-hydroxyethyl acrylate, 2-hydroxyethyl methacrylate, 2-hydroxybutyl acrylate, and 2-hydroxybutyl methacrylate.

The hydroxyl group-containing monomer is still more preferably a monomer represented by

Formula (A): $CH_2=CH-(CH_2)_l-O-(CH_2)_m-OH$

wherein l is 0 or 1, m is an integer of 2 to 20,
and particularly preferably at least one monomer selected from the group consisting of 4-hydroxybutyl vinyl ether, 2-hydroxyethyl vinyl ether, 2-hydroxyethyl allyl ether, and 4-hydroxybutyl allyl ether.

(Unsaturated monomer having guest group (D))

The structure represented by the above (2a) is a structure formed by polymerizing a monomer represented by the following general formula (2b):

[Formula 14]

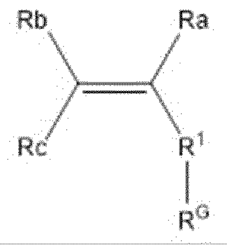

(2b)

wherein

Ra, Rb, Rc, $R^1$, and $R^G$ are as defined in the formula (2a) .

The structure represented by the above (2'a) is a structure formed by polymerizing a monomer represented by the following general formula (2'b):

[Formula 15]

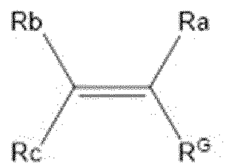

(2'b)

wherein Ra, Rb, Rc, and $R^G$ are as defined in the formula (2a).

In the resin composition or polymer of the present disclosure, the monomer having the host group (A) is preferably present in a proportion of 0.001 to 0.5 mol% based on the total amount of the resin composition or polymer. The presence of the host group (A) within such a range is preferable in that suitable self-repairing performance can be obtained. In the calculation, the proportion of the monomer to the total number of moles of unsaturated monomers constituting the polymer is calculated. Therefore, in the case of a resin composition obtained by mixing a plurality of kinds of resins as described in detail below or a polymer obtained by reacting these resins, the content is the mol% of the monomer having the host group (A) based on all constituent units of the plurality of kinds of resins. The same applies to the following blending amounts of (B) to (D).

The upper limit is more preferably 0.1 mol% and still more preferably 0.05 mol%. The lower limit is more preferably 0.01 mol%, and still more preferably 0.2 mol%.

The resin composition or polymer of the present disclosure preferably contains the monomer having a hydroxyl group (C) in a proportion of 0.0001 to 0.05 mol%. The presence of the hydroxyl group (C) within such a range is preferable in that an appropriate amount of crosslinking by ester bonds is generated, and gelation due to overcrosslinking and insufficient peel strength due to insufficient crosslinking described later are suppressed.

The upper limit is more preferably 0.02 mol%, and still more preferably 0.001 mol%. The lower limit is more preferably 0.0005 mol%.

The resin composition or polymer of the present disclosure preferably contains the monomer having a carboxyl group (B) in a proportion of 60 to 99.99 mol%. The presence of the carboxyl group (B) within such a range is preferable in that good adhesion to the current collector foil is exhibited.

The upper limit is preferably 98 mol%. The lower limit is more preferably 80 mol%, and still more preferably 90 mol%.

In the resin composition or polymer of the present disclosure, the monomer having the guest group (D) is preferably present in a proportion of 0.001 to 0.5 mol%. The presence of the host group (A) within such a range is preferable in that suitable self-repairing performance can be obtained.

The upper limit is more preferably 0.1 mol% and still more preferably 0.05 mol%. The lower limit is more preferably 0.01 mol%, and still more preferably 0.2 mol%.

When the resin composition or polymer has both the host group (A) and the guest group (D), the proportion of the host group (A) and the guest group (D) is preferably (A):(D) = 2:1 to 1: 1 (molar ratio).

The resin composition or polymer of the present disclosure may partially have a constituent unit based on

unsaturated monomers other than those described above as long as the object of the present disclosure is not impaired. The content of constituent units based on unsaturated monomers other than those described above is preferably 0.1 mol% or more, more preferably 1 mol% or more, and more preferably 5 mol% or more. The content of constituent units based on unsaturated monomers other than those described above is preferably 30 mol% or less, more preferably 10 mol% or less.

Examples of constituent units based on unsaturated monomers other than those described above include (meth)acrylate esters. More specific examples thereof include acrylate esters represented by $CH_2$=CHCO-O-$R_{31}$ and methacrylate esters represented by $CH_2$=$CCH_3$CO-O-$R_{31}$ wherein $R_{31}$ represents a linear, branched or cyclic alkyl group having 1 to 20 carbon atoms. If necessary, two or more thereof may be used together. More specific examples thereof include acrylic monomers such as methyl (meth)acrylate, ethyl (meth)acrylate, and n-butyl (meth)acrylate; benzyl (meth)acrylate; isopropyl (meth)acrylate; n-hexyl (meth)acrylate; and dodecyl (meth)acrylate.

The polymer of the present disclosure is preferably obtained by carrying out a chemical reaction with respect to the resin composition or polymer having the above-described constituent units, and is more preferably obtained by carrying out a condensation reaction for forming an ester bond.

That is, the resin composition or copolymer having the functional groups of (A) to (C) and optionally used (D) described above may be subjected to an ester group-forming reaction, and at least a part of each of the hydroxyl group (C) and the carboxyl group (B) may be reacted to form an ester chain.

The polymer of the present disclosure subjected to the above reaction may have an ester group constituting a crosslinked chain. The "ester group constituting a crosslinked chain" means a structure in which both an alkyl group derived from a carboxyl group of an ester group and an alkyl group derived from a hydroxyl group are linked to the main chain of a resin, rather than an ester group constituting a terminal group, such as a methyl ester group or an ethyl ester group.

The method for obtaining a polymer having the "ester group constituting a crosslinked chain" is not limited, but it is preferable to carry out an ester group-forming reaction on the copolymer or resin composition having the host group (A), the carboxyl group (B) and the hydroxyl group (C). The method will be described in detail below.

The polymer having "an ester group constituting a crosslinked chain" is preferable in that flexibility can be obtained by a resin structure having a crosslinked chain. Further, by linking a plurality of polymers having different performances by crosslinking, it is possible to obtain a binder having good performance without impairing the performance inherent in each resin.

When the polymer of the present disclosure has been subjected to a condensation reaction for forming an ester bond as described above, the raw material may be a copolymer having all of (A) to (C) and optionally used (D), or a resin composition having (A) to (C) and optionally used (D), which is a mixture of a plurality of kinds of polymers having one or two or more functional groups among (A) to (C) and optionally used (D).

It is preferable to mix a polymer having the above described (A), (B) and optionally used (D) with polyacrylic acid as a raw material for carrying out such a condensation reaction, and to cause a polycondensation reaction with the mixture. Such a polymer is especially preferable in that it can exhibit both self-repairing performance by a polymer having the host group and adhesion performance by polyacrylic acid. Further, since the crosslinked chain is formed, a plurality of kinds of resins do not cause phase separation and adhesion is not reduced, which is also preferable.

In this case, the mixing proportion of the polymer (hereinafter, this is referred to as polymer (I)) having (A), (B) and optionally (D) and the polyacrylic acid is preferably polymer (I)/polyacrylic acid = 30/70 to 1/99 (weight ratio), more preferably 20/80 to 1/99, and more preferably 10/90 to 1/99. By setting the mixing proportion to the above range, both functions of the adhesion improvement and the self-repairing function can be exhibited in a balanced manner, and a remarkably excellent effect is exhibited in the improvement of the battery performance.

The polyacrylic acid used in the embodiment may be a homopolymer, or may be partially copolymerized with other monomers. In the polyacrylic acid, 90 mol% or more of the constituent units is preferably a constituent unit based on acrylic acid. The copolymerization component is not limited, and examples thereof include the above-described acrylate esters.

The polycondensation method is not limited, but a particularly suitable method will be described in detail below. The polymer of the present disclosure is not limited to the polymer obtained by the method described in detail below.

The polycondensation can be carried out by converting a part or the whole of the carboxyl group in the polyacrylic acid into an acid chloride (step (1), Scheme I), then adding the polymer (I) into the polymer after the step (1), and reacting the acid chloride group with a hydroxyl group (step (2), Scheme II).

[Formula 16]

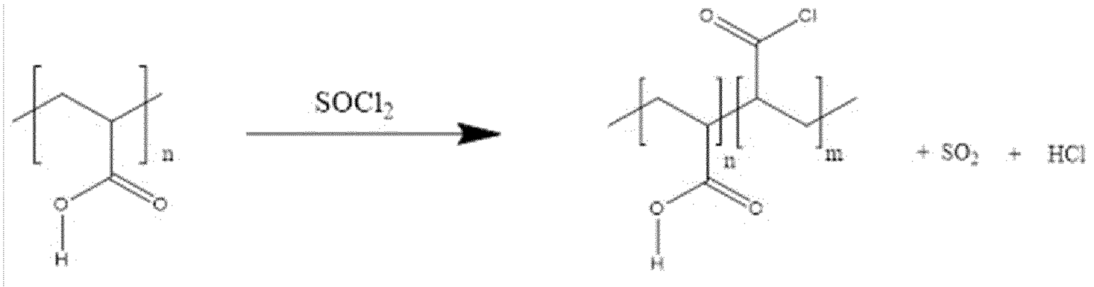


Scheme I

[Formula 17]

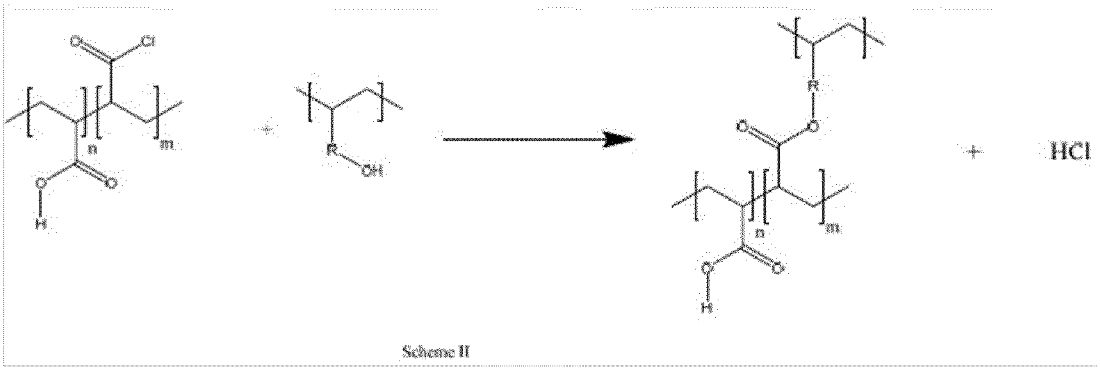

Scheme II

In the above-described method, by-products other than sulfur dioxide and hydrogen chloride are not present in both steps (1) and (2). That is, since the by-products are gaseous compounds at room temperature, they can be easily removed from the resin. Therefore, it is preferable in that a polymer without impurities can be obtained. In particular, when the polymer is used as a binder for an electrochemical device, even a trace amount of impurities adversely affects the performance, and thus it is preferable in that a polymer in which impurities are hardly mixed can be obtained by the above-described production method.

The step (1) is a step of converting a carboxyl group of polyacrylic acid into an acid chloride group by reacting the carboxyl group with thionyl chloride. The reaction is well known to those skilled in the art, and can be carried out under general reaction conditions. The reaction is preferably carried out in solution. The reaction solvent is preferably methylene chloride, chloroform, toluene, benzene, diethyl ether, ethyl acetate, acetone, tetrahydrofuran, or the like. The reaction temperature is preferably room temperature to 150°C, preferably 40 to 80°C.

In the step (1), it is preferable that 0.01 to 30 mol% of the carboxyl groups in the polyacrylic acid are converted into acid chlorides. Within the above range, the properties of each of the polymer (1) and the polyacrylic acid can be exhibited in a cooperative manner while maintaining the properties thereof.

If the amount of acid chloride is too large or too small, these performances cannot be obtained. The lower limit is preferably 0.05 mol%, and still more preferably 0.1 mol%. The upper limit is preferably 10 mol%, and more preferably 5 mol%.

The amount of the acid chloride group in the step (1) is preferably an amount in which 50 mol% or more of the hydroxyl groups in the polymer is consumed. That is, it is preferable that 50 mol% or more of the above hydroxyl group (C) forms a crosslinking reaction with a carboxyl group. The above ratio is more preferably 70 mol% or more, and still more preferably 80 mol% or more.

In the step (1), the amount to be acid-chlorinated can be set to a predetermined amount by adjusting the amount of thionyl chloride added to the polyacrylic acid.

In the step (1), it is preferable to remove sulfur dioxide and hydrogen chloride as by-products by drying under reduced pressure after completion of the reaction.

The step (2) is a step of mixing the acid-chlorinated polyacrylic acid and the polymer (1) by the step (1). By this step, the acid chloride group reacts with the hydroxyl group in the polymer (1) to obtain the desired polymer.

The reaction can be easily carried out by mixing the acid-chlorinated polyacrylic acid obtained in the step (1) with the polymer (1) in a solution. The reaction temperature is preferably room temperature to 80°C.

In the step (2), it is preferable to remove hydrogen chloride as by-product by drying under reduced pressure after completion of the reaction.

The polymer thus obtained can be described in detail as a binder for an electrochemical device, which will be described in detail below, after the solvent is dried and removed to form a powder.

(Electrode mixture)

The present disclosure is also an electrode mixture comprising the binder for an electrochemical device described above, an electrode active material, and water or a non-aqueous solvent. The electrode active material is divided into a positive electrode active material and a negative electrode active material. The positive electrode active material and the negative electrode active material are not limited, and examples thereof include ones used in a known electrochemical device such as a secondary battery such as a lead battery, a NiCd battery, a nickel hydrogen battery, a lithium ion battery, or an alkali metal sulfur battery, or an electric double layer capacitor.

<Positive electrode>

The positive electrode active material is not limited, and examples thereof include one used in a known electrochemical device. The positive electrode active material of the lithium ion secondary battery will be specifically described below; the positive electrode active material is not restricted as long as it can electrochemically absorb and desorb a lithium ion, and examples thereof include a lithium-containing transition metal composite oxide, a lithium-containing transition metal phosphoric acid compound, a sulfur-based material, and a conductive polymer. Among these, the positive electrode active material is preferably a lithium-containing transition metal composite oxide or a lithium-containing transition metal phosphoric acid compound, and particularly preferably a lithium-containing transition metal composite oxide that produces a high voltage.

The transition metal of the lithium-containing transition metal composite oxide is preferably V, Ti, Cr, Mn, Fe, Co, Ni, Cu, or the like, and specific examples of the lithium transition metal composite oxide include a lithium-cobalt composite oxide such as $LiCoO_2$, a lithium-nickel composite oxide such as $LiNiO_2$, a lithium-manganese composite oxide such as $LiMnO_2$, $LiMn_2O_4$, or $Li_2MnO_3$, and such lithium transition metal composite oxides in which a part of the transition metal atoms that predominantly constitute the same is replaced with another metal such as Al, Ti, V, Cr, Mn, Fe, Co, Li, Ni, Cu, Zn, Mg, Ga, Zr, or Si. Examples of those involving the above-described replacement include lithium-nickelmanganese composite oxide, lithium-nickel-cobalt-aluminum composite oxide, lithium-nickel-cobalt-manganese composite oxide, lithium-manganese-aluminum composite oxide, and lithium-titanium composite oxide, and more specifical examples include $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, $LiMn_{1.8}Al_{0.2}O_4$, $LiMn_{1.5}Ni_{0.5}O_4$, $Li_4Ti_5O_{12}$, and $LiNi_{0.82}Co_{0.15}Al_{0.03}O_2$.

The transition metal of the lithium-containing transition metal phosphoric acid compound is preferably V, Ti, Cr, Mn, Fe, Co, Ni, Cu, or the like, and specific examples of the lithium-containing transition metal phosphoric acid compound include an iron phosphate such as $LiFePO_4$, $Li_3Fe_2(PO_4)_3$, or $LiFeP_2O_7$, a cobalt phosphate such as $LiCoPO_4$, and such lithium transition metal phosphate compounds in which a part of the transition metal atoms that predominantly constitute the same is replaced with another metal such as Al, Ti, V, Cr, Mn, Fe, Co, Li, Ni, Cu, Zn, Mg, Ga, Zr, Nb, or Si.

In particular, from the viewpoint of high voltage, high energy density, charge/discharge cycle characteristics, and the like, $LiCoO_2$, $LiNiO_2$, $LiMn_2O_4$, $LiNi_{0.82}Co_{0.15}Al_{0.03}O_2$, $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and $LiFePO_4$ are preferable.

Examples of the sulfur-based material include a material containing a sulfur atom, and at least one selected from the group consisting of elemental sulfur, a metal sulfide, and an organic sulfur compound is preferable, and elemental sulfur is more preferable. The metal sulfide may be a metal polysulfide. The organic sulfur compound may be an organic polysulfide.

Examples of the metal sulfide include a compound represented by $LiS_x$ ($0 < x \leq 8$); a compound represented by $Li_2S_x$ ($0 < x \leq 8$); a compound having a two-dimensional layered structure such as $TiS_2$ or $MoS_2$; and a Chevrel compound having a strong three-dimensional skeleton structure represented by the general formula $Me_xMo_6S_8$ (Me is any of various transition metals such as Pb, Ag, and Cu) .

Examples of the organic sulfur compound include a carbon sulfide compound.

The organic sulfur compound may be carried on a material having a pore such as carbon and used as a carbon composite material in some cases. The content of sulfur contained in the carbon composite material is preferably 10 to 99% by weight, more preferably 20% by weight or more, further preferably 30% by weight or more, and particularly preferably 40% by weight or more, and preferably 85% by weight or less, based on the carbon composite material, because the cycle performance is further better and the overvoltage is further reduced.

When the positive electrode active material is the elemental sulfur, the content of sulfur contained in the positive electrode active material is equal to the content of the elemental sulfur.

Examples of the conductive polymer include a p-doped conductive polymer and an n-doped conductive polymer. Examples of the conductive polymer include polyacetylene-based, polyphenylene-based, and heterocyclic polymers, ionic polymers, and ladder and network polymers.

In addition, a substance having a composition different from that of the substance predominantly constituting the positive electrode active material can also be used to attach it to the surface of the positive electrode active material. Examples of the surface attached substance include an oxide such as aluminum oxide, silicon oxide, titanium oxide, zirconium oxide, magnesium oxide, calcium oxide, boron oxide, antimony oxide, or bismuth oxide; a sulfate such as lithium sulfate, sodium sulfate, potassium sulfate, magnesium sulfate, calcium sulfate, or aluminum sulfate; a carbonate such as lithium carbonate, calcium carbonate, or magnesium carbonate; and an organic polymer.

The surface attached substance can be attached to the surface of the positive electrode active material, for example, by a method of dissolving or suspending the substance in a solvent to add the solution or suspension to a positive electrode active material by impregnation, and then drying the active material; a method of dissolving or suspending a precursor of the surface attached substance in a solvent to add the solution or suspension to a positive electrode active material by impregnation, and then causing a reaction by heating or the like; or a method of adding the substance to a precursor of a positive electrode active material and at the same time, firing the resulting mixture.

The surface attached substance is used in an amount of, as the lower limit, preferably 0.1 ppm or more, more preferably 1 ppm or more, and further preferably 10 ppm or more, and, as the upper limit, preferably 20% or less, more preferably 10% or less, and further preferably 5% or less, by weight based on the amount of the positive electrode active material. The surface attached substance can suppress the oxidation reaction of the non-aqueous electrolytic solution on the surface of the positive electrode active material and improve the battery life, but if the amount attached is too low, the effect thereof is not sufficiently developed, whereas if the amount attached is too high, the surface attached substance may inhibit the entry and exit of a lithium ion and thus the resistance increases in some cases.

Examples of the shape of a particle of the positive electrode active material used include a lump shape, a polyhedral shape, a spherical shape, an ellipsoidal spherical shape, a plate shape, a needle shape, and a columnar shape, which are conventionally used, and among these, the shape of a secondary particle formed by aggregation of a primary particle is preferably spherical or ellipsoidal spherical. Usually, in an electrochemical element, the active material in the electrode expands and contracts with the charge and discharge thereof, and thus the stress is likely to cause a deterioration such as fracture of the active material or breakage of the conductive path. Because of this, a particle active material obtained by aggregation of the primary particle to form the secondary particle is more preferable than the single particle active material containing only the primary particle because the former relaxes the stress of expansion and contraction to prevent a deterioration. In addition, a spherical or ellipsoidal spherical particle is less oriented in shaping of an electrode than an axis-oriented particle such as a plate-shaped particle, and thus the expansion and contraction of the electrode during charge and discharge is also smaller, and even when mixed with a conductive agent in creation of the electrode, the spherical or ellipsoidal spherical particle is easily mixed therewith uniformly, and thus is preferable.

The positive electrode active material has a tap density of usually 1.5 g/$cm^3$ or more, preferably 2.0 g/$cm^3$ or more, further preferably 2.5 g/$cm^3$ or more, and most preferably 3.0 g/$cm^3$ or more. If the tap density of the positive electrode active material is less than the above lower limit, the amount of a dispersion medium required in formation of a positive electrode active material layer may increase, the amounts of a conductive material and a binder required may increase, the rate of filling the positive electrode active material layer with the positive electrode active material may be restricted, and the battery capacity may be restricted, in some cases. Use of a metal complex oxide powder having a high tap density allows formation of a high-density positive electrode active material layer. A larger tap density is generally more preferable, the upper limit thereof is not set, and the tap density is usually 4.5 g/$cm^3$ or less and preferably 4.3 g/$cm^3$ or less.

The tap density of the positive electrode active material is determined as follows: the positive electrode active material is passed through a sieve having an opening size of 300 μm, a sample is dropped into a 20-$cm^3$ tapping cell to fill the cell volume, and then a powder density measuring instrument (for example, Tap Denser manufactured by Seishin Enterprise Co., Ltd.) is used to perform tapping at a stroke length of 10 mm 1000 times, and the density obtained from the volume and the weight of the sample at that time is defined as the tap density.

The positive electrode active material particle has a median size d50 (secondary particle size when a primary particle aggregates to form a secondary particle) of usually 0.1 μm or more, preferably 0.5 μm or more, more preferably 1 μm or more, and most preferably 3 μm or more, and usually 20 μm or less, preferably 18 μm or less, more preferably 16 μm or less, and most preferably 15 μm or less. If the median size is less than the above lower limit, a high bulk density product may not be obtained in some cases, and if the median size exceeds the upper limit, dispersion of lithium in the particle takes a longer time, which may thus, in some cases, cause a problem such as degradation in battery performance or formation of a streak when a positive electrode of a battery is created, that is, when the active material, a conductive agent, a binder, or the like is slurried with a solvent and applied in the form of a thin film. Here, it is also possible to further improve the filling properties when the positive electrode is created, by mixing two or more positive electrode active materials having different median diameters d50.

The median size d50 in the present disclosure is measured using a known laser diffraction/scattering type particle size distribution measuring instrument. When LA-920 manufactured by HORIBA, Ltd. is used as a particle size distribution analyzer, the median size is measured using a 0.1 wt% sodium hexametaphosphate aqueous solution as a dispersion medium used in the measurement, and by setting the measurement refractive index to 1.24 after ultrasonic dispersion for 5 minutes.

When the primary particle aggregates to form a secondary particle, the average primary particle size of the positive electrode active material is usually 0.01 μm or more, preferably 0.05 μm or more, further preferably 0.08 μm or more, and most preferably 0.1 μm or more, and usually 3 μm or less, preferably 2 μm or less, further preferably 1 μm or less, and most preferably 0.6 μm or less. If the average primary particle size exceeds the above upper limit, it is difficult to form a spherical secondary particle, which may adversely affect the powder filling properties and greatly reduce the specific surface area, and thus be likely to reduce battery performance characteristics such as output characteristics in some cases. On the contrary, if the average primary particle size is less than the above lower limit, a crystal is usually underdeveloped, and thus a problem such as poor reversibility of charge/discharge may occur in some cases. The primary particle size is measured by observation using a scanning electron microscope (SEM). Specifically, in a photograph at a magnification of 10000, the longest value of the intercept by the left and right boundary lines of a primary particle with respect to the straight line in the horizontal direction is obtained for any 50 primary particles, and the average value thereof is taken as the average primary particle size.

The BET specific surface area of the positive electrode active material is 0.2 $m^2/g$ or more, preferably 0.3 $m^2/g$ or more, and further preferably 0.4 $m^2/g$ or more, and 50 $m^2/g$ or less, preferably 10 $m^2/g$ or less, and further preferably 5.0 $m^2/g$ or less. If the BET specific surface area is smaller than this range, the battery performance tends to deteriorate, and if the BET specific surface area is larger, the tap density does not easily increase, and a problem may easily occur with the applicability during formation of the positive electrode active material in some cases.

The BET specific surface area is determined as follows: a sample is predried under nitrogen gas circulation at 150°C for 30 minutes and then is subjected to measurement using a surface meter (for example, a fully automatic surface area measuring instrument manufactured by Okura Riken), using a nitrogen-helium mixed gas accurately adjusted such that the value of the relative pressure of nitrogen with respect to atmospheric pressure is 0.3, and by a nitrogen adsorption BET one-point method by a gas flow method, and the measured value is defined as the BET specific surface area.

As a method of producing a positive electrode active material, a method that is general as a method of producing an inorganic compound is used. In particular, various methods can be considered for producing a spherical or ellipsoidal spherical active material, and examples thereof include a method in which a transition metal source material such as a nitrate or a sulfate of a transition metal and optionally a source material of another element are dissolved or crushed and dispersed in a solvent such as water, the pH of the resulting liquid is regulated with stirring to create and recover a spherical precursor, the recovered precursor is optionally dried, then a Li source such as LiOH, $Li_2CO_3$, or $LiNO_3$ is added, the resulting mixture is fired at a high temperature to obtain an active material; a method in which a transition metal source material such as a nitrate, a sulfate, a hydroxide, or an oxide and optionally a source material of another element are dissolved or crushed and dispersed in a solvent such as water, then the resulting liquid is sprayed and shaped using a spray dryer or the like into a spherical or ellipsoidal spherical precursor, a Li source such as LiOH, $Li_2CO_3$, and $LiNO_3$ is added thereto, the resulting mixture is fired at a high temperature to obtain an active material; and a method in which a transition metal source material such as a nitrate, a sulfate, a hydroxide, or an oxide, a Li source such as LiOH, $Li_2CO_3$, and $LiNO_3$, and optionally a source material of another element are dissolved or crushed and dispersed in a solvent such as water, then the resulting liquid is sprayed and shaped using a spray dryer or the like into a spherical or ellipsoidal spherical precursor, and this precursor is fired at a high temperature to obtain an active material.

In the present disclosure, one positive electrode active material may be used alone, or two or more positive electrode active materials having different compositions or different powder physical properties may be used together in any combination and at any ratio.

<Negative electrode>

The negative electrode is composed of a negative electrode active material layer containing a negative electrode active material, and a current collector. The negative electrode active material is not limited, and examples thereof include one used in a known electrochemical device. The positive electrode active material of the lithium ion secondary battery will be specifically described below; the positive electrode active material is not limited as long as it can electrochemically absorb and desorb a lithium ion. Specific examples thereof include a carbonaceous material, an alloy-based material, a lithium-containing metal composite oxide material, and a conductive polymer. One of these may be used alone or two or more may be used together in any combination.

The carbonaceous material that can absorb and desorb lithium is preferably artificial graphite produced by high-temperature treatment of graphitizable pitch obtained from various raw materials or purified natural graphite, or a material obtained by surface treatment of one of these graphites with pitch or another organic substance followed by

carbonization; and more preferably a carbonaceous material selected from natural graphite, artificial graphite, a carbonaceous material obtained by heat-treating an artificial carbonaceous substance and an artificial graphite substance one or more times in the range of 400 to 3200°C, a carbonaceous material in which a negative electrode active material consists of at least two carbonaceous substances having different crystallinities and/or has an interface at which the carbonaceous substances having different crystallinities are in contact with each other, and a carbonaceous material in which a negative electrode active material layer has an interface at which at least two carbonaceous substances having different orientations are in contact with each other, because it has a good balance between the initial irreversible capacity and the charge/discharge characteristics at high current density. One of these carbonaceous materials can be used alone, or two or more thereof can be used together in any combination and at any ratio.

Examples of the carbonaceous material obtained by heat-treating an artificial carbonaceous substance and an artificial graphite substance one or more times in the range of 400 to 3200°C include a carbon nanotube, graphene, a coal-based coke, a petroleum-based coke, a coal-based pitch, a petroleum-based pitch and those obtained by oxidizing these pitches, needle coke, pitch coke, and carbon materials obtained by partially graphitizing these cokes, furnace black, acetylene black, a pyrolysate of an organic substance such as a pitch-based carbon fiber, a carbonizable organic substance and a carbonization product thereof, and a solution obtained by dissolving a carbonizable organic substance in a low molecular weight organic solvent such as benzene, toluene, xylene, quinoline, or n-hexane and a carbonization product thereof.

A metal material (excluding lithium titanium composite oxide) used as the negative electrode active material is not restricted and may be any of elemental lithium, an elemental metal and an alloy forming a lithium alloy, or a compound such as oxides, carbides, nitrides, silicides, sulfides, or phosphides thereof as long as it can absorb and desorb lithium. The elemental metal and alloy forming a lithium alloy are preferably a material containing group 13 and group 14 metal/semi-metal elements, and more preferably elemental metals of aluminum, silicon, and tin (hereinafter, abbreviated as "specific metal elements") and an alloy or a compound containing these atoms. One of these may be used alone, or two or more thereof may be used together in any combination and at any ratio.

Examples of the negative electrode active material having at least one atom selected from the specific metal elements include an elemental metal of any one specific metal, an alloy consisting of two or more specific metal elements, an alloy consisting of one or two or more specific metal elements and one or two or more other metal elements, and a compound containing one or two or more specific metal elements, and a composite compound such as an oxide, a carbide, a nitride, and a silicate, a sulfide, or a phosphate of the compound. Use of such an elemental metal, an alloy, or a metal compound as the negative electrode active material can increase the capacity of the battery.

As a metal particle that can be alloyed with Li, any conventionally known metal particle can be used, and from the viewpoint of capacity and cycle life, the metal particle is preferably a metal selected from the group consisting of Fe, Co, Sb, Bi, Pb, Ni, Ag, Si, Sn, Al, Zr, Cr, P, S, V, Mn, Nb, Mo, Cu, Zn, Ge, In, Ti, and the like or a compound thereof. In addition, an alloy consisting of two or more metals may be used, and the metal particle may be an alloy particle formed by two or more metal elements. Among these, a metal selected from the group consisting of Si, Sn, As, Sb, Al, Zn, and W or a metal compound thereof is preferable.

Examples of the metal compound include a metal oxide, a metal nitride, and a metal carbide. In addition, an alloy consisting of two or more metals may be used.

In addition, further examples include a compound in which such a composite compound is complicatedly bonded to an elemental metal, an alloy, or several elements such as a non-metal element. Specifically, for example for silicon and tin, an alloy of such an element and a metal that does not act as a negative electrode can be used. For example, in the case of tin, a complicated compound containing 5 or 6 elements, obtained by combining tin, a metal that acts as a negative electrode, except for silicon, a metal that does not act as a negative electrode, and a non-metal element can also be used.

Among the metal particles that can be alloyed with Li, Si or a Si metal compound is preferable. The Si metal compound is preferably a Si metal oxide. Si or the Si metal compound is preferable in terms of increasing the capacity. As used herein, Si or a Si metal compound is collectively referred to as a Si compound. Specific examples of the Si compound include SiOx, SiNx, SiCx, and SiZxOy (Z = C or N). The Si compound is preferably a Si metal oxide, and the Si metal oxide is SiOx as represented by a general formula. This general formula SiOx is obtained using silicon dioxide (SiO2) and metal Si (Si) as raw materials, and the value of x is usually $0 \leq x < 2$.

SiOx has a larger theoretical capacity than graphite, and an amorphous Si or nano-sized Si crystal allows an alkaline ion such as a lithium ion to easily enter and exit the same, making it possible to obtain a high capacity.

The Si metal oxide is specifically represented by SiOx, wherein x is $0 \leq x < 2$, more preferably 0.2 or more and 1.8 or less, further preferably 0.4 or more and 1.6 or less, and particularly preferably 0.6 or more and 1.4 or less, and X = 0 is especially preferable. Within this range, it is possible to provide a high capacity and at the same time reduce the irreversible capacity due to the bonding of Li and oxygen.

In addition, examples include a composite material containing Si or Sn as a first constituent element and second and third constituent elements in addition thereto. The second constituent element is, for example, at least one of cobalt,

iron, magnesium, titanium, vanadium, chromium, manganese, nickel, copper, zinc, gallium, and zirconium. The third constituent element is, for example, at least one of boron, carbon, aluminum, and phosphorus.

The lithium-containing metal composite oxide material used as the negative electrode active material is not limited as long as it can absorb and desorb lithium, and is preferably a material containing titanium and lithium, more preferably a lithium-containing composite metal oxide material containing titanium, and further preferably a composite oxide of lithium and titanium (hereinafter, abbreviated as a "lithium-titanium composite oxide"), from the viewpoint of charge/discharge characteristics at high current density. That is, a lithium-titanium composite oxide having a spinel structure is particularly preferable because when it is contained in the negative electrode active material for an electrolytic solution battery and used, the output resistance is greatly reduced.

The lithium-titanium composite oxide is preferably a compound represented by the general formula:

$$Li_xTi_yM_zO_4$$

wherein M represents at least one element selected from the group consisting of Na, K, Co, Al, Fe, Ti, Mg, Cr, Ga, Cu, Zn, and Nb.

Among the above compositions, a structure satisfying one of the following:

(i) $1.2 \leq x \leq 1.4$, $1.5 \leq y \leq 1.7$, $z = 0$
(ii) $0.9 \leq x \leq 1.1$, $1.9 \leq y \leq 2.1$, $z = 0$
(iii) $0.7 \leq x \leq 0.9$, $2.1 \leq y \leq 2.3$, $z = 0$

is particularly preferable because the structure provides a good balance of battery performance.

A particularly preferable representative composition of the above compound is $Li_{4/3}Ti_{5/3}O_4$ for (i), $Li_1Ti_2O_4$ for (ii), and $Li_{4/5}Ti_{11/5}O_4$ for (iii) . In addition, preferable examples of the structure satisfying $Z \neq 0$ include $Li_{4/3}Ti_{4/3}Al_{1/3}O_4$.

The content of the electrode active material (positive electrode active material or negative electrode active material) is preferably 40% by weight or more in the electrode mixture in order to increase the capacity of the electrode obtained.

The electrode mixture may further contain a conductive agent. The conductive agent is an additive blended to improve conductivity, and examples thereof include a carbon powder such as graphite, Ketjen black, inverse opal carbon, or acetylene black, and various carbon fibers such as a vapor-grown carbon fiber (VGCF), a graphene sheet, and a carbon nanotube (CNT).

The electrode mixture of the present disclosure further contains a dispersion medium of an aqueous solvent or an organic solvent. Water is usually used as the aqueous solvent, and an alcohol such as ethanol or an organic solvent such as a cyclic amide such as N-methylpyrrolidone can also be used together with water in the range of 30% by weight or less based on water. Examples of the organic solvent include a nitrogen-containing organic solvent such as N-methyl-2-pyrrolidone, N,N-dimethylacetamide, or dimethylformamide; a ketone-based solvent such as acetone, methyl ethyl ketone, cyclohexanone, or methyl isobutyl ketone; an ester-based solvent such as ethyl acetate or butyl acetate; an ether-based solvent such as tetrahydrofuran or dioxane; and a general-purpose organic solvent having a low boiling point such as a mixed solvent thereof. Any one of these may be used alone, or two or more thereof may be used together in any combination and at any ratio. Among these, N-methyl-2-pyrrolidone and/or N,N-dimethylacetamide are preferable from the viewpoint of excellent stability and applicability of the electrode mixture.

In addition, a thickener can be used to stabilize the slurry. Examples of the thickener include carboxymethyl cellulose, methyl cellulose, hydroxymethyl cellulose, ethyl cellulose, polyvinyl alcohol, oxidized starch, phosphorylated starch, and casein. One of these may be used alone, or two or more thereof may be used together in any combination and at any ratio. The thickener may be used as needed, and when used, the content of the thickener in the negative electrode active material layer is usually preferably in the range of 0.5% by weight or more and 5% by weight or less.

The amount of the dispersion medium blended in the electrode mixture is determined in consideration of the applicability to the current collector, the thin film forming properties after drying, and the like. The proportion of the binder for an electrochemical device to the dispersion medium is preferably 0.5:99.5 to 20:80 in terms of weight ratio.

The electrode mixture may further contain, for example, an acrylic resin such as polymethacrylate or polymethylmethacrylate, a polyimide-, polyamide-, or polyamideimide-based resin, or the like in order to further improve the adhesiveness to the current collector. In addition, a cross-linking agent may be added and irradiation with a radiation such as a $\gamma$-ray or an electron beam can be performed to form a cross-linked structure. The cross-linking treatment method is not limited to irradiation with a radiation, and as another cross-linking method, for example an amine group-containing compound capable of thermal cross-linking, a cyanurate group-containing compound, or the like may be added for thermal cross-linking.

In order to improve the dispersion stability of the slurry, a dispersant such as a resin-based surfactant, a cationic surfactant, or a nonionic surfactant having a surface active action or the like may be added to the electrode mixture.

Further, a conventionally known binder such as styrene-butadiene rubber, cellulose, polyvinylidene fluoride (PVdF), or polytetrafluoroethylene (PTFE) may be used together.

The content of the binder for an electrochemical device according to the present disclosure blended in the electrode mixture is preferably 0.05 to 20% by weight, and more preferably 1 to 10% by weight of the electrode mixture.

A method of preparing an electrode mixture containing the binder for an electrochemical device is generally a method in which the electrode active material is dispersed and mixed into a solution or a dispersion obtained by dissolving or dispersing the binder in the dispersion medium. Then, the obtained electrode mixture is uniformly applied to a current collector such as a metal foil or a metal mesh, dried, and pressed as necessary to form a thin electrode mixture layer on the current collector to prepare a thin-film electrode.

In addition thereto, for example, after the binder and the electrode active material is mixed first, the dispersion medium may be added to make a mixture. In addition, after the binder and the electrode active material is heated and melted and extruded using an extruder to make a thin film mixture, the thin film mixture can also be bonded onto a current collector coated with a conductive adhesive or a general-purpose organic solvent to make an electrode sheet. Further, a solution or a dispersion of the binder may be applied to the electrode active material preformed in advance. As described above, the method of application as a binder is not limited.

(Electrode)

The present disclosure is also an electrode comprising the binder for an electrochemical device according to the present disclosure described above.

The electrode preferably has a current collector and an electrode material layer formed on the current collector and composed of the electrode active material and the binder for an electrochemical device. The effects of the present disclosure can be obtained regardless of whether the binder for an electrochemical device according to the present disclosure is used for a positive electrode or a negative electrode, and thus the binder for an electrochemical device according to the present disclosure is not limited to either electrode. In particular, the binder for an electrochemical device according to the present disclosure can follow the volume of the electrode active material during charge and discharge, and is preferably used for a high-capacity active material such as a Si-based negative electrode material.

Examples of the current collector (positive electrode current collector and negative electrode current collector) include a foil or a mesh of a metal such as iron, stainless steel, copper, aluminum, nickel, or titanium. Among these, aluminum foil or the like is preferable as the positive electrode current collector, and copper foil or the like is preferable as the negative electrode current collector.

The electrodes of the present disclosure can be produced, for example, by a method described above.

(Electrochemical device)

The present disclosure is also an electrochemical device comprising the electrode described above.

The electrochemical device is not limited, and can be applied to a conventionally known electrochemical device. Specific examples thereof include

a secondary battery such as a lithium ion battery, a primary battery such as a lithium battery, a sodium ion battery, a magnesium ion battery, a radical battery, a solar cell (particularly a dye-sensitized solar cell), and a fuel cell;
a capacitor such as a lithium ion capacitor, a hybrid capacitor, electrochemical capacitor, or an electric double layer capacitor;
various capacitors such as an aluminum electrolytic capacitor or a tantalum electrolytic capacitor; and
an electrochromic element, an electrochemical switching element, and various electrochemical sensors.

Among these, the electrochemical device can also be preferably used for a secondary battery which has a high capacity and a large output and thus causes a large volume change due to the movement of a large amount of a metal ion.

(Secondary battery)

The present disclosure is also a secondary battery comprising the electrode of the present disclosure described above. In the secondary battery of the present disclosure, at least one of the positive electrode and the negative electrode may be the electrode of the present disclosure described above, and the negative electrode is preferably the electrode of the present disclosure as described above. The secondary battery is preferably a lithium ion battery.

The secondary battery of the present disclosure preferably further includes a non-aqueous electrolytic solution. The non-aqueous electrolyte solution is not limited, and as the organic solvent, one or two or more of a known hydrocarbon-based solvent such as propylene carbonate, ethylene carbonate, butylene carbonate, $\gamma$-butyl lactone, 1,2-dimethoxyethane, 1,2-diethoxyethane, dimethyl carbonate, diethyl carbonate, ethyl methyl carbonate, or ethyl propionate; and a fluorine-based solvent such as fluoroethylene carbonate, fluoroether, fluorinated carbonate, or trifluoroethyl methyl carbonate can be used. Any conventionally known electrolyte can be used, and examples of the electrolyte that can be used include $LiClO_4$, $LiAsF_6$, $LiPF_6$, $LiBF_4$, LiCl, LiBr, $CH_3SO_3Li$, $CF_3SO_3Li$, $LiN(FSO_2)_2$, $LiN(CF_3SO_2)_2$, lithium bis(oxalato)borate, $LiPO_2F_2$, cesium carbonate.

In addition, a separator may be interposed between the positive electrode and the negative electrode. As the separator, a conventionally known separator may be used, or a separator using the binder for an electrochemical device according to the present disclosure described above for coating may be used.

Examples of the separator include conventionally known one, and specific examples thereof include a glass fiber separator that absorbs and retains an electrolytic solution, and a porous sheet or a non-woven fabric that is made of a polymer. The porous sheet is composed of, for example, a microporous polymer. Examples of the polymer composing such a porous sheet include a polyolefin such as polyethylene (PE) or polypropylene (PP); a laminate having a three-layer structure of PP/PE/PP, polyimide, and aramid. In particular, a polyolefin-based microporous separator and a glass fiber separator are preferable because they have the property of being chemically stable in an organic solvent and can suppress the reactivity with the electrolytic solution to a low level. The thickness of the separator composed of a porous sheet is not limited, and in the application of a secondary battery for driving a vehicle motor, the separator is preferably composed of a single layer or a multilayer having a total thickness of 4 to 60 μm. In addition, the separator composed of a porous sheet preferably has a fine pore size of at most 10 μm or less (usually about 10 to 100 nm) and a porosity of 20 to 80%.

Conventionally known nonwoven fabrics such as cotton, rayon, acetate, nylon (registered trademark), or polyester; a polyolefin such as PP or PE; polyimide, or aramid are used as the nonwoven fabric singly or by being mixed. The porosity of the nonwoven fabric separator is preferably 50 to 90%. Further, the thickness of the nonwoven fabric separator is preferably 5 to 200 μm, and particularly preferably 10 to 100 μm. If the thickness is less than 5 μm, retention of an electrolyte may worsen in some cases, and if the thickness exceeds 200 μm, the resistance may increase in some cases.

## Examples

Next, the present disclosure will be described with reference to Examples, but the present disclosure is not limited to such Examples.

In the following Examples, unless otherwise specified, "parts" and "%" represent "parts by weight" and "% by weight," respectively.

### Synthesis Example 1 (Synthesis of polymer material A)

In a reaction vessel, 478 mg (0.20 mmol) of peracetyl-6-acrylamidomethyl-γ-cyclodextrin as a polymerizable monomer having a host group, 85 mg (0.20 mmol) of 2-(perfluorohexyl)ethyl acrylate as a polymerizable monomer having a guest group, 2000 mg (20 mmol) of ethyl acrylate and 24 mg (0.20 mmol) of 2-hydroxyethyl acrylate were mixed, and the mixture was stirred by applying ultrasonic waves.

To this mixture, dichloromethane was added so that the % by weight of the monomer was 50%, and the 8.3 mg (2.1 mmol) of photoinitiator Irgacure 184 was added, and ultraviolet irradiation was performed using a highpressure mercury lamp for 1 hour to obtain a solution of a polymer material A.

### Synthesis Example 2 (Synthesis of polymer material B)

A solution of a polymer material B was obtained in the same manner as in Synthesis Example 1 except that the amount of 2-hydroxyethyl acrylate to be used was 2.4 mg (0.02 mmol).

### Synthesis Example 3 (Synthesis of polymer material C)

A solution of a polymer material C was obtained in the same manner as in Synthesis Example 1 except that the amount of 2-hydroxyethyl acrylate to be used was 1.2 mg (0.01 mmol).

### Synthesis Example 4 (Synthesis of polymer material D)

A solution of a polymer material D was obtained by the same method as in Synthesis Example 1 except that the molar ratio of each monomer was made the same and the polymerizable monomer having the host group was peracetyl-6-acrylamidomethyl-α-cyclodextrin and the polymerizable monomer having a guest group was n-butyl acrylate.

Synthesis Example 5 (Synthesis of polymer material E)

A solution of a polymer material E was obtained by the same method as in Synthesis Example 1 except that the molar ratio of each monomer was made the same and the polymerizable monomer having the host group was peracetyl-6-acrylamidomethyl-β-cyclodextrin and the polymerizable monomer having a guest group was N-(1-adamantyl)acrylamide.

(Measurement of molecular weight)

The number-average molecular weight was measured by GPC using dimethyl sulfoxide as an eluent and polyethylene glycol (CALIBRATION KIT, manufactured by SCIENTIFIC POLYMER PRODUCTS) as a standard substance. The column used was TSKgel Super AWM-H manufactured by Tosoh.

Synthesis Example 6 (Making of composition A0)

To 100 ml of dimethyl sulfoxide, a solution of 10 g of commercially available polyacrylic acid (viscosity average molecular weight 450,000, manufactured by Aldrich) and the solution of the polymer material obtained in Synthesis Example 1 were added so that the weight ratio of the polyacrylic acid to the polymer material was 95:5, and the mixture was stirred, the solvent was distilled off with an evaporator, and dried under reduced pressure at 120°C to obtain a composition A0.

Synthesis Example 7 (Synthesis of polymer material A1)

To 10 g of commercially available polyacrylic acid (viscosity average molecular weight 450,000, manufactured by Aldrich), 100 ml of dichloromethane was added under a nitrogen atmosphere to make a suspension, and thionyl chloride was added so that the weight ratio of the polyacrylic acid to thionyl chloride was 99.7:0.3, and heated to reflux for 3 hours. The solution of the polymer material A obtained in Synthesis Example 1 was added thereto so that the weight ratio of the polyacrylic acid to the polymer material was 98:2, and the mixture was heated and refluxed overnight, the solvent was distilled off with an evaporator, and dried under reduced pressure at 60°C to obtain a polymer material A1. GPC measurement under the described conditions revealed that the number-average molecular weight was found to be 160,791. GPC measurement under the described conditions revealed that the number-average molecular weight of the polyacrylic acid used before the reaction was 48,740.

Synthesis Example 8 (Synthesis of polymer material A2)

A polymer material A2 was obtained in the same manner as in Synthesis Example 7 except that the weight ratio of the polyacrylic acid and the polymer material for the solution of the polymer material A obtained in Synthesis Example 1 was 95:5. GPC measurement under the described conditions revealed that the number-average molecular weight was found to be 240,947.

Synthesis Example 9 (Synthesis of polymer material A3)

A polymer material A3 was obtained in the same manner as in Synthesis Example 7 except that the weight ratio of the polyacrylic acid and the polymer material for the solution of the polymer material A obtained in Synthesis Example 1 was 90:10. GPC measurement under the described conditions revealed that the number-average molecular weight was found to be 848,811.

Synthesis Example 10 (Synthesis of polymer material B1)

To 10 g of commercially available polyacrylic acid (viscosity average molecular weight 450,000, manufactured by Aldrich), 100 ml of dichloromethane was added under a nitrogen atmosphere to make a suspension, and thionyl chloride was added so that the weight ratio of the polyacrylic acid to thionyl chloride was 99.7:0.3, and heated to reflux for 3 hours. A solution of the polymer material B obtained in Synthesis Example 2 was added thereto so that the weight ratio of the polyacrylic acid to the polymer material was 98:2, and the mixture was heated and refluxed overnight, the solvent was distilled off with an evaporator, and dried under reduced pressure at 60°C to obtain a polymer material B1. GPC measurement under the described conditions revealed that the number-average molecular weight was found to be 74,711.

Synthesis Example 11 (Synthesis of polymer material B2)

A polymer material B2 was obtained in the same manner as in Synthesis Example 10 except that the weight ratio of the polyacrylic acid and the polymer material for the solution of the polymer material B obtained in Synthesis Example 2 was 95:5. GPC measurement under the described conditions revealed that the number-average molecular weight was found to be 90,726.

Synthesis Example 12 (Synthesis of polymer material B3)

A polymer material B3 was obtained in the same manner as in Synthesis Example 10 except that the weight ratio of the polyacrylic acid and the polymer material for the solution of the polymer material B obtained in Synthesis Example 2 was 90:10. GPC measurement under the described conditions revealed that the number-average molecular weight was found to be 186,775.

Synthesis Example 13 (Synthesis of polymer material C1)

To 10 g of commercially available polyacrylic acid (viscosity average molecular weight 450,000, manufactured by Aldrich), 100 ml of dichloromethane was added under a nitrogen atmosphere to make a suspension, and thionyl chloride was added so that the weight ratio of the polyacrylic acid to thionyl chloride was 99.7:0.3, and heated to reflux for 3 hours. A solution of the polymer material C obtained in Synthesis Example 3 was added thereto so that the weight ratio of the polyacrylic acid to the polymer material was 98:2, and the mixture was heated and refluxed overnight, the solvent was distilled off with an evaporator, and dried under reduced pressure at 60°C to obtain a polymer material C1. GPC measurement under the described conditions revealed that the number-average molecular weight was found to be 63,299.

Synthesis Example 14 (Synthesis of polymer material C2)

A polymer material C2 was obtained in the same manner as in Synthesis Example 13 except that the weight ratio of the polyacrylic acid and the polymer material for the solution of the polymer material C obtained in Synthesis Example 3 was 95:5. GPC measurement under the described conditions revealed that the number-average molecular weight was found to be 89,431.

Synthesis Example 15 (Synthesis of polymer material C3)

A polymer material C3 was obtained in the same manner as in Synthesis Example 13 except that the weight ratio of the polyacrylic acid and the polymer material for the solution of the polymer material C obtained in Synthesis Example 3 was 90:10. GPC measurement under the described conditions revealed that the number-average molecular weight was found to be 99,632.

Synthesis Example 16 (Synthesis of polymer material D2)

To 10 g of commercially available polyacrylic acid (viscosity average molecular weight 450,000, manufactured by Aldrich), 100 ml of dichloromethane was added under a nitrogen atmosphere to make a suspension, and thionyl chloride was added so that the weight ratio of the polyacrylic acid to thionyl chloride was 99.7:0.3, and heated to reflux for 3 hours. A solution of the polymer material D obtained in Synthesis Example 4 was added thereto so that the weight ratio of the polyacrylic acid to the polymer material was 95:5, and the mixture was heated and refluxed overnight, the solvent was distilled off with an evaporator, and dried under reduced pressure at 60°C to obtain a polymer material D2. GPC measurement under the described conditions revealed that the number-average molecular weight was found to be 86,651.

Synthesis Example 17 (Synthesis of polymer material E2)

To 10 g of commercially available polyacrylic acid (viscosity average molecular weight 450,000, manufactured by Aldrich), 100 ml of dichloromethane was added under a nitrogen atmosphere to make a suspension, and thionyl chloride was added so that the weight ratio of the polyacrylic acid to thionyl chloride was 99.7:0.3, and heated to reflux for 3 hours. A solution of the polymer material E obtained in Synthesis Example 5 was added thereto so that the weight ratio of the polyacrylic acid to the polymer material was 95:5, and the mixture was heated and refluxed overnight, the solvent was distilled off with an evaporator, and dried under reduced pressure at 60°C to obtain a polymer material E2.

GPC measurement under the described conditions revealed that the number-average molecular weight was found to be 81,197.

(Polymer material F)

Commercially available polyacrylic acid (manufactured by Aldrich, viscosity average molecular weight 450,000) was used as a compound F. GPC measurement under the described conditions revealed that the number-average molecular weight was found to be 48,740.

(Polymer material G)

Commercially available polyrotaxane (manufactured by Advanced Soft Materials Inc., trade name: SeRM Super Polymer SH3400M (weight-average molecular weight of 400,000)) was used as a compound G. Polyrotaxane is a material that exhibits high stretchability by a cyclic polymer sliding on a linear polymer, wherein the linear polymer is polyethylene glycol, the cyclic molecule is polycaprolactone graft α-cyclodextrin, and the terminal group is adamantanamine. GPC measurement under the described conditions revealed that the number-average molecular weight was found to be 368,418. The compound G is a compound having no carboxyl group.

(Polymer material H)

A mixture of sodium carboxymethylcellulose (CMC2200 manufactured by Daicel FineChem Ltd.) and styrene-butadiene rubber (TRD2001 manufactured by JSR Corporation) at a weight ratio of 2:3 was used.

(Preparation of electrolytic solution)

Ethylene carbonate and fluoroethylene carbonate, which are high dielectric constant solvents, and dimethyl carbonate, which is a low viscosity solvent, were mixed in such a way as to have a volume ratio of 20/10/70, and $LiPF_6$ was added to the resulting mixture in such a way as to have a concentration of 1.2 mol/liter to obtain a non-aqueous electrolytic solution.

(Making lithium ion secondary battery)

[Making positive electrode]

95% by mass of $LiNi_{0.6}Co_{0.2}Mn_{0.2}O_2$ (NMC) as a positive electrode active material, 2% by mass of acetylene black as a conductive material, and 3% by mass of polyvinylidene fluoride (PVdF) as a binder were mixed in a N-methylpyrrolidone solvent to form a slurry. The obtained slurry was applied to one side of an aluminum foil having a thickness of 15 μm on an aluminum foil current collector having a thickness of 15 μm, dried, and rolled and pressed by a press, and cut into a shape having a width of 50 mm, and a length of 30 mm as the size of the active material layer, and having an uncoated portion with a width of 5 mm and a length of 9 mm to form a positive electrode.

Artificial graphite powder and amorphous silicon (SiO) as negative electrode active materials, an active material, and a predetermined polymer of the present disclosure ((compounds A0 to H)) were mixed in such a way as to have a solid ratio of 80/14/6 (mass% ratio) to provide a slurry negative electrode mixture slurry. The slurry was applied to a copper foil having a thickness of 10 μm, dried, and then rolled using a press to obtain a negative electrode. The resulting product was cut into a shape having a width of 52 mm, and a length of 32 mm as the size of the active material layer, and having an uncoated portion with a width of 5 mm, and a length of 9 mm to form a negative electrode.

[Making aluminum laminated cell]

The positive electrode and negative electrode were opposed to each other through a microporous polyethylene film (separator) having a thickness of 20 μm, and the non-aqueous electrolytic solution obtained above was injected; after the non-aqueous electrolytic solution sufficiently permeated into the separator or the like, the workpiece was sealed, precharged, and aged to make a lithium ion secondary battery.

(Measurement of battery characteristics)

(Cycle capacity retention)

The secondary battery produced above was subjected to constant current-constant voltage charge (hereinafter, referred to as "CC/CV charge") up to 4.25 V at a current corresponding to 1 C (0.1 C cut off) at 25°C, then the battery was discharged to 3 V at a constant current of 1 C, and when this process was defined as one cycle, the initial discharge capacity was determined from the discharge capacity of the first cycle. Here, 1 C represents a current value for discharging the reference capacity of a battery over one hour, and for example, 0.1 C represents a current value that is 1/10 of the above current value. After CC/CV charge (0.1 C cut off) was performed again to 4.25 V, charge and discharge were performed in the same manner, and the discharge capacity after 150 cycles was measured. The proportion of the discharge capacity after 150 cycles to the initial discharge capacity was determined based on the following expression, and this was taken as the cycle capacity retention (%). The measurement temperature was 25°C. Results are shown in the following Table 1.

$$\text{(Discharge capacity after 150 cycles) / (initial discharge capacity)} \times 100 = \text{cycle capacity retention (\%)}$$

[Evaluation of IV resistance]

After the evaluation of the initial discharge capacity was completed, the battery was charged at 25°C at a constant current of 1 C so as to have a capacity half the initial discharge capacity. This was discharged at 2.0 C, and the voltage at 10 seconds was measured. The resistance was calculated from the drop in voltage during discharge, and was taken as the IV resistance.

The results are shown in Table 1.

[Gas generation amount]

After the cycle characteristic test was completed, the battery was sufficiently cooled, the volume was measured by the Archimedes method, and the amount of gas generated was obtained from the volume change before and after the high temperature cycle characteristic test.

(Evaluation of electrode adhesion (negative electrode peeling test))

The electrode side of the negative electrode cut into 1.2 cm in length and 8.0 cm in width was fixed to a movable jig, a tape was attached on the current collector side, and the stress (N/cm) when the tape was pulled by 90° at a speed of 100 mm/min were measured by an autograph.

[Table 1]

| | Example 1 | Example 2 | Example 3 | Example 4 | Example 5 | Example 6 | Example 7 | Example 8 |
|---|---|---|---|---|---|---|---|---|
| Polymer component (% by weight in electrode mixture) | Compound A0 (5) | Compound A1 (5) | Compound A2 (5) | Compound A3 (5) | Compound B1 (5) | Compound B2 (5) | Compound B3 (5) | Compound C1 (5) |
| Capacity retention (%) | 80 | 85 | 86 | 87 | 84 | 85 | 84 | 80 |
| IV resistance (mΩ) | 2380 | 2400 | 2360 | 2350 | 2300 | 2200 | 2180 | 2350 |
| Gas generation amount (ml) | 2.5 | 2.4 | 2.4 | 2.3 | 2.5 | 2.4 | 2.3 | 2.3 |
| Electrode adhesion evaluation (N/cm) | 0.20 | 0.24 | 0.25 | 0.26 | 0.30 | 0.33 | 0.40 | 0.31 |

| | Example 9 | Example 10 | Example 11 | Example 12 | Comparative Example 1 | Comparative Example 2 | Comparative Example 3 |
|---|---|---|---|---|---|---|---|
| Polymer component (% by weight in electrode mixture) | Compound C2 (5) | Compound C3 (5) | Compound D2 (5) | Compound E2 (5) | Compound F (5) | Compound G (5) | Compound H (5) |
| Capacity retention (%) | 81 | 82 | 80 | 81 | 77 | 75 | 51 |
| IV resistance (mΩ) | 2300 | 2280 | 2550 | 2480 | 2800 | 3150 | 3500 |
| Gas generation amount (ml) | 2.1 | 1.9 | 3.1 | 3.2 | 3.4 | 3.8 | 4.0 |
| Electrode adhesion evaluation (N/cm) | 0.33 | 0.35 | 0.28 | 0.26 | 0.23 | | |

From the results in Table 1, it became clear that the lithium ion batteries of the Examples using the binder of the present disclosure exhibit excellent life characteristics because the discharge capacity retention after the cycle characteristic test is high. It is considered that the deterioration of the binder due to expansion and contraction of the active material is suppressed because the crosslinking has flexibility by maintaining the adhesion of the polyacrylic acid and crosslinking with the polymer. In addition, the IV resistance values of Examples were smaller than those of Comparative Examples, and it was shown that the discharge amount was good. Further, the amount of gas generated was small in the lithium ion batteries of Examples, and thus it was shown that the volume changes were small even after repeating charge and discharge.

Industrial Applicability

The polymer of the present disclosure can be suitably used as a binder for an electrochemical device such as a secondary battery or the like.

**Claims**

1. A resin composition comprising a first polymer having a host group in a side chain and a second polymer having a carboxyl group in a side chain.

2. The resin composition according to claim 1, wherein the first polymer has a hydroxyl group.

3. The resin composition according to any one of claims 1 and 2, wherein the first polymer has a guest group.

4. A polymer having a host group (A) and a carboxyl group (B),
wherein the polymer has a number-average molecular weight of 50,000 to 5,000,000.

5. A polymer obtained by chemically reacting a first polymer having a host group in a side chain and a second polymer having a carboxyl group in a side chain.

6. The polymer according to claim 5, wherein the first polymer has a hydroxyl group.

7. The polymer according to any one of claims 5 and 6, wherein the chemical reaction is an ester group-forming reaction, and the first polymer and the second polymer are crosslinked.

8. The polymer according to any one of claims 4 to 7, wherein the host group is cyclodextrin or a derivative thereof.

9. The polymer according to any one of claims 5 to 8, wherein the first polymer has a guest group.

10. The polymer according to claim 9, wherein the guest group is a hydrocarbon group.

11. The polymer according to claim 9 or 10, wherein the guest group has 3 to 20 carbon atoms.

12. The polymer according to any one of claims 9, 10 and 11, wherein the guest group has one or more fluorine groups.

13. The polymer according to any one of claims 5 to 12, wherein the second polymer is polyacrylic acid.

14. A method for producing a polymer comprising performing an ester group-forming reaction with a first polymer having a host group in a side chain and a second polymer having a carboxyl group in a side chain.

15. A binder for an electrochemical device, comprising the polymer according to any one of claims 4 to 13.

16. An electrode mixture comprising the binder for an electrochemical device according to claim 15, an electrode active material, and a dispersion medium.

17. An electrode comprising the binder for an electrochemical device according to claim 15, an electrode active material, and a current collector.

18. The electrode according to claim 17, which is a positive electrode.

19. The electrode according to claim 17, which is a negative electrode.

20. The electrode according to claim 17 or 19, wherein the electrode active material contains, in at least a part thereof, a carbonaceous material.

21. The electrode according to claim 17 or 19, wherein the electrode active material contains, in at least a part thereof, a silicon-containing compound.

22. An electrochemical device comprising the electrode according to any one of claims 17 to 21.

23. A secondary battery comprising the electrode according to any one of claims 17 to 21.

24. The secondary battery according to claim 23, which is a lithium ion battery.

**INTERNATIONAL SEARCH REPORT**

International application No.
PCT/JP2020/042882

A. CLASSIFICATION OF SUBJECT MATTER
Int. Cl. C08F20/58(2006.01)i, C08G81/02(2006.01)i, H01M4/02(2006.01)i, H01M4/04(2006.01)i, H01M4/587(2010.01)i, H01M4/62(2006.01)i, H01G11/38(2013.01)i, H01M6/16(2006.01)i
FI: C08G81/02, H01M4/62 Z, H01M4/04 Z, H01M4/02 Z, H01M6/16 Z, H01M4/587, H01G11/38, C08F20/58

According to International Patent Classification (IPC) or to both national classification and IPC

B. FIELDS SEARCHED

Minimum documentation searched (classification system followed by classification symbols)
Int. Cl. C08F20/58, C08G81/02, H01M6/16, H01M4/02, H01M4/04, H01M4/587, H01M4/62, H01G11/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2019-204719 A (TOYOTA INDUSTRIES CORP.) 28 November 2019, claims, paragraphs [0006], [0038], [0047]-[0052], [0063], [0079]-[0082], [0095], examples | 1-11, 13-24<br>1-24 |
| X<br>A | CN 106674531 A (CCCC-SHEC WUHAN PORT NEW MAT CO., LTD.) 17 May 2017, claims | 1-3, 5-11, 14<br>4, 12, 13, 15-24 |
| X<br>A | JP 2010-540714 A (SECRETARY, DEPARTMENT OF ATOMIC ENERGY) 24 December 2010, claims | 1, 3<br>2, 4-24 |
| Y | WO 2018/227366 A1 (ROBERT BOSCH GMBH) 20 December 2018, claims, p. 1, paragraph [0003], p. 4, paragraph [0006], examples | 1-24 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20.01.2021 | 02.02.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/042882

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | WO 2018/038186 A1 (DAIKIN INDUSTRIES, LTD.) 01 March 2018, claims, paragraph [0005] | 12<br>1-11, 13-24 |
| A | WO 2013/124950 A1 (HITACHI VEHICLE ENERGY, LTD.) 29 August 2013 | 1-24 |

Form PCT/ISA/210 (continuation of second sheet) (January 2015)

**INTERNATIONAL SEARCH REPORT**
Information on patent family members

International application No.
PCT/JP2020/042882

| Patent Documents referred to in the Report | Publication Date | Patent Family | Publication Date |
|---|---|---|---|
| JP 2019-204719 A | 28.11.2019 | (Family: none) | |
| CN 106674531 A | 17.05.2017 | (Family: none) | |
| JP 2010-540714 A | 24.12.2010 | EP 2205672 A1<br>claims | |
| WO 2018/227366 A1 | 20.12.2018 | CN 110770950 A<br>KR 10-2020-0018449 A | |
| WO 2018/038186 A1 | 01.03.2018 | US 2019/0177455 A1<br>claims, paragraph [0005]<br>EP 3505572 A1<br>CN 109642085 A<br>KR 10-2019-0036565 A | |
| WO 2013/124950 A1 | 29.08.2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014065407 A
- JP 2009080971 A
- JP 2018038186 A
- JP 2013162019 A
- JP 2012036069 A
- JP 2018174038 A